# EUROPEAN PATENT APPLICATION

(11) **EP 4 615 136 A1**
(43) Date of publication of application: **10.09.2025**
(21) Application number: 23885442.6
(22) Date of filing: 05.10.2023
(51) Int. Cl.: H04W 74/08, H04W 28/04, H04W 72/0446, H04W 72/21

(54) **TERMINAL, BASE STATION, AND COMMUNICATION METHOD**

(30) Priority: 03.11.2022 JP 2022176815
(71) Applicant: DENSO CORPORATION, Kariya-city, Aichi 448-8661 (JP)
(72) Inventor: FURUYAMA Takahiro, Kariya-city, Aichi 448-8661 (JP)
(74) Representative: TBK
(86) International application number: PCT/JP2023/036303
(87) International publication number: WO 2024/095679

(57) **Abstract**

A terminal according to one aspect of the present disclosure includes: a communication section that receives a first downlink shared channel for a random access procedure, in a second band narrower than a first band for a specific terminal; and a processing section that processes, in a case of repetitions or decoding of the first downlink shared channel across a plurality of slots, transmission of an uplink channel in response to the first downlink shared channel or reception of a second downlink shared channel.

## Description

### CROSS REFERENCE TO RELATED APPLICATION

This application is based on Patent Application No. 2022-176815 filed in Japan on November 3, 2022. The entire disclosures of all of the above application are incorporated herein by reference.

### TECHNICAL FIELD

The present disclosure relates to a terminal, a base station, and a communication method in next-generation mobile communication systems.

### BACKGROUND ART

In Release 17 (Rel. 17) of the New Radio (NR) technical specifications by the 3rd Generation Partnership Project (3GPP (registered trademark)), which is a mobile communication system standardization project, a type of a communication apparatus (UE (User Equipment)) with reduced performance suitable for use cases such as industrial sensors, monitoring cameras, and wearables is introduced. Such a terminal type (also referred to as a "UE type") is also referred to as a "reduced capability (RedCap) UE."

In Release 18 of the 3GPP NR technical specifications, it is studied to introduce a new terminal type with further reduced complexity than that of a RedCap UE. Such a new terminal type is assumed to have performance between a RedCap UE introduced in Release 17 and an LTE (Long Term Evolution) LPWA (Low Power Wide Area). Such a new terminal type may be referred to as an "eRedCap (enhanced RedCap) UE."

For such an eRedCap UE, the following proposals are made: (a) to reduce a frequency bandwidth that can be supported in FR1 (Frequency Range 1), to a certain bandwidth (for example, 5 MHz); and (b) to reduce a frequency bandwidth for a data channel in FR1, to a certain bandwidth in order to reduce a peak data rate (see Non-Patent Literatures 1 to 4, for example). Here, a data channel means a physical channel that transmits data, specifically, a physical downlink shared channel (PDSCH) and/or a physical uplink shared channel (PUSCH). A frequency bandwidth is also referred to simply as a "bandwidth."

The method of (a) above can reduce a bandwidth that can be supported, for each of both an RF (Radio Frequency) section and a BB (Base Band) section of the UE (i.e., a maximum bandwidth), to reduce complexity of the RF section and the BB section. Meanwhile, the method of (b) above can mainly reduce a bandwidth that can be supported, for a BB section of a UE, to reduce complexity of the BB section. The method of (b) above can also reduce changes in technical specifications about physical channel configurations other than a PDSCH and/or a PUSCH.

### PRIOR ART LITERATURE

### NON-PATENT LITERATURE

Non-Patent Literature 1: 3GPP TSG RAN WG1 Meeting #110bis-e, R1-2208362, October 10th-19th, 2022, "Further RedCap UE complexity reduction"
Non-Patent Literature 2: 3GPP TSG RAN WG1 Meeting #110bis-e, R1-2208416, October 10th-19th, 2022, "Discussion on solutions to further reduce UE complexity"
Non-Patent Literature 3: 3GPP TSG RAN WG1 Meeting #110bis-e, R1-2208653, October 10th-19th, 2022, "Discussion on UE further complexity reduction"
Non-Patent Literature 4: 3GPP TSG RAN WG1 Meeting #110bis-e, R1-2209912, October 10th-19th, 2022, "Discussion on further UE complexity reduction for eRedCap"

### SUMMARY OF INVENTION

However, when an eRedCap UE conforms to an existing 3GPP NR standard of Rel. 17 or earlier versions in a case of using a reduced bandwidth compared to that for a RedCap UE, communication throughput may degrade.

In view of this, an object of the present disclosure is to provide a terminal, a base station, and a communication method that enable appropriate communication even when a reduced bandwidth compared to that for a RedCap UE is used.

A terminal according to one aspect of the present disclosure includes: a communication section that receives a first downlink shared channel for a random access procedure, in a second band narrower than a first band for a specific terminal; and a processing section that processes, in a case of repetitions or decoding of the first downlink shared channel across a plurality of slots, transmission of an uplink channel in response to the first downlink shared channel or reception of a second downlink shared channel.

A base station according to one aspect of the present disclosure includes: a transmitting section that transmits a first downlink shared channel for a random access procedure, in a second band narrower than a first band for a specific terminal; and a processing section that processes, in a case of repetitions or decoding of the first downlink shared channel across a plurality of slots, reception of an uplink channel in response to the first downlink shared channel or transmission of a second downlink shared channel.

A communication method performed in a terminal according to one aspect of the present disclosure includes: receiving a first downlink shared channel for a random access procedure, in a second band narrower than a first band for a specific terminal; and processing, in a case of repetitions or decoding of the first downlink shared channel across a plurality of slots, transmission of an uplink channel in response to the first downlink shared channel or reception of a second downlink shared channel.

According to one aspect of the present disclosure, it is possible to appropriately perform communication even when a reduced bandwidth compared to that for a RedCap UE is used.

### BRIEF DESCRIPTION OF DRAWINGS

FIG. 1 is a diagram to show an example of a schematic structure of a system according to one embodiment of the present disclosure.
FIG. 2 is a diagram to show an example of a schematic functional structure of a base station according to one embodiment of the present disclosure.
FIG. 3 is a diagram to show an example of a schematic hardware structure of the base station according to one embodiment of the present disclosure.
FIG. 4 is a diagram to show an example of a schematic functional structure of a UE according to one embodiment of the present disclosure.
FIG. 5 is a diagram to show an example of a schematic hardware structure of the UE according to one embodiment.
FIG. 6 is a diagram to show an example of correspondence between values of controlResourceSetZero, which is a parameter included in pdcch-ConfigSIB1 included in an MIB, and parameters corresponding to CORESET #0.
FIG. 7 is a diagram to show an example of correspondence between values of searchSpaceZero, which is a parameter included in pdcch-ConfigSIB1 included in an MIB, and parameters corresponding to search space set #0.
FIG. 8 is a diagram to show an example of a band used by an eRedCap UE using a reduced bandwidth for all channels.
FIG. 9 is a diagram to show an example of bandwidths used by an eRedCap UE using a reduced bandwidth only for a data channel.
FIG. 10 is a diagram to show an example of 4-step CBRA.
FIG. 11 is a diagram to show an example of 2-step CBRA.
FIG. 12 is a diagram to show an example of 4-step CFRA.
FIG. 13 is a diagram to show an example of 2-step CFRA.
FIG. 14 is a diagram to show an example of a MAC RAR.
FIG. 15 is a diagram to show an example of a fallback RAR.
FIG. 16 is a diagram to show an example of a success RAR.
FIG. 17 is a diagram to show an example of a RAR UL grant.
FIG. 18 is a diagram to show an example of determination of a TDRA table.
FIG. 19 is a diagram to show an example of the TDRA table.
FIG. 20 is a diagram to show an example of determination of A.
FIG. 21 is a diagram to show an example of indication of the number of repetitions of a PDSCH in a first case.
FIG. 22 is a diagram to show an example of determination of repetitions of a PDSCH in the first case.
FIG. 23 is a diagram to show an example of Msg3 transmission operation in the first case.
FIG. 24 is a diagram to show an example of HARQ feedback transmission operation in the first case.
FIG. 25 is a diagram to show an example of Msg3 transmission operation in a second case.
FIG. 26 is a diagram to show an example of HARQ feedback transmission operation in the second case.
FIG. 27 is a diagram to show an example of PDSCH reception operation in the second case.

### DESCRIPTION OF EMBODIMENTS

An embodiment of the present disclosure will be described in detail with reference to the attached drawings as follows. In this specification and the drawings, elements that can be described similarly are denoted by the same sign, which can omit overlapping description.

Description will be given in the following order.
1. Structure of System
2. Structure of Base Station
3. Structure of User Equipment
4. Operation Examples

### <1. Structure of System>

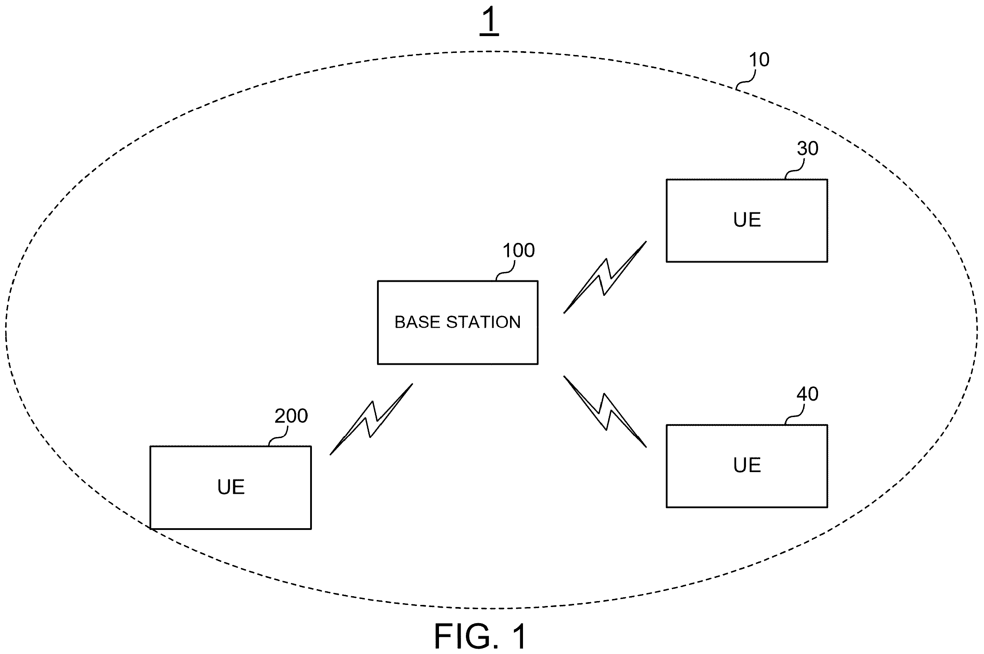

By referring to FIG. 1, an example of a structure of a system 1 according to the embodiment of the present disclosure will be described. With reference to FIG. 1, the system 1 includes a base station 100, a user equipment (UE) 30, a UE 40, and a UE 200.

For example, the system 1 is a system conforming to a 3GPP TS. More concretely, for example, the system 1 is a system conforming to a TS of 5G or NR (New Radio). The system 1 is apparently not limited to this example.

### (1) Base Station 100

The base station 100 is a radio access network (RAN) node and communicates with a UE located in a coverage area 10 of the base station 100. For example, the base station 100 communicates with the UE 30, the UE 40, and the UE 200.

For example, the base station 100 communicates with a UE (for example, the UE 30, the UE 40, or the UE 200) by using a RAN protocol stack. For example, the protocol stack includes the RRC, SDAP (service data adaptation protocol), PDCP (packet data convergence protocol), RLC (radio link control), MAC (medium access control), and physical (PHY) layer protocols. Alternatively, the protocol stack may include part of the protocols instead of including all the protocols.

For example, the base station 100 is a gNB. A gNB is a node that provides NR user plane and control plane protocol terminations towards the UE and is connected to a 5GC (5G Core Network) via an NG interface. Alternatively, the base station 100 may be an en-gNB. An en-gNB is a node that provides NR user plane and control plane protocol terminations towards the UE and operates as a secondary node in EN-DC (E-UTRA-NR Dual Connectivity).

The base station 100 may include a plurality of nodes. The plurality of nodes may include a first node, which hosts a higher layer included in the protocol stack, and a second node, which hosts a lower layer included in the protocol stack. The higher layer may include the RRC, the SDAP, and the PDCP layers, and the lower layer may include the RLC, the MAC, and the PHY layers. The first node may be a CU (central unit), while the second node may be a DU (distributed unit). The plurality of nodes may include a third node, which performs processing of a layer lower than the PHY layer, and the second node may perform processing of a layer higher than the PHY layer. The third node may be an RU (radio unit).

Alternatively, the base station 100 may be one of the plurality of nodes and may be connected with another unit of the plurality of nodes.

The base station 100 may be an IAB (integrated access and backhaul) donor or an IAB node.

### (2) UE 30, UE 40, and UE 200

Each of the UE 30, the UE 40, and the UE 200 communicates with a base station. For example, each of the UE 30, the UE 40, and the UE 200 communicates with the base station 100 when being in the coverage area 10 of the base station 100.

For example, each of the UE 30, the UE 40, and the UE 200 communicates with a base station (for example, the base station 100) by using the protocol stack.

For example, the UE 30 is a normal UE, which is not a RedCap UE, while the UE 40 and the UE 200 are RedCap UEs. A RedCap UE is a UE having reduced capability. The UE 40 is a first-type RedCap UE, while the UE 200 is a second-type RedCap UE.

The first-type RedCap UE is a UE having a maximum bandwidth of 20 MHz for FR1 and 100 MHz for FR2. FR1 is a frequency range from 410 MHz to 7125 MHz, while FR2 is a frequency range from 24250 MHz to 52600 MHz.

The second-type RedCap UE is a UE having capability further reduced from that of the first-type RedCap UE. For example, the second-type RedCap UE has a peak data rate lower than the peak data rate of the first-type RedCap UE. For example, a peak rate (for example, the maximum peak data rate) supported by the second-type RedCap UE may be 10 Mbps. For example, the second-type RedCap UE communicates with a base station by using a narrower band than that of the first-type RedCap UE. For example, the maximum bandwidth of the second-type RedCap UE is smaller than the first-type RedCap UE. For example, a maximum bandwidth (for example, the maximum bandwidth(s) for downlink and/or uplink) supported by the second-type RedCap UE may be up to 5 MHz. The maximum bandwidth is a maximum bandwidth for the time of transmitting and receiving specific information (for example, user data or the like), for example.

For example, the first-type RedCap UE is a Rel-17 RedCap UE, while the second-type RedCap UE is a Rel-18 RedCap UE. The second-type RedCap UE may be referred to as an eRedCap UE.

The "RedCap UE" in the present disclosure and at least one of the first-type RedCap UE and the second-type RedCap UE may be interchangeably interpreted.

In the embodiment of the present disclosure, the UE 200 may perform not only operation described as operation of the UE 200 but also operation described as operation of the UE 30 and/or operation described as operation of the UE 40.

### <2. Structure of Base Station>

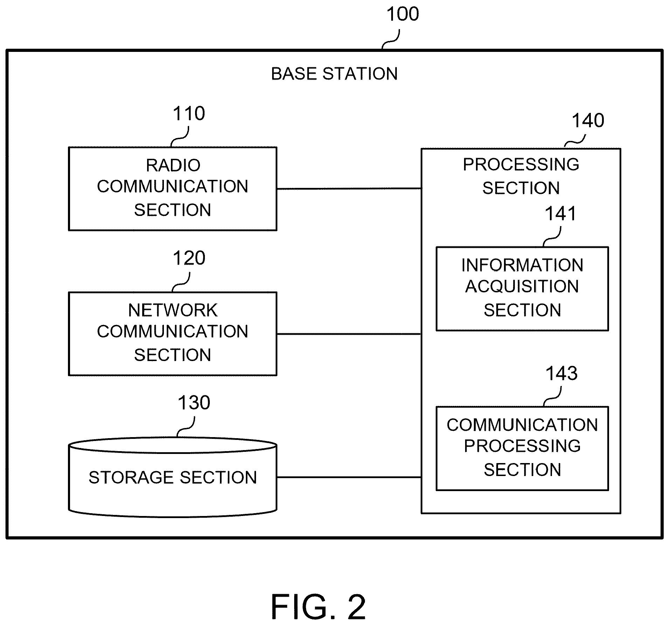

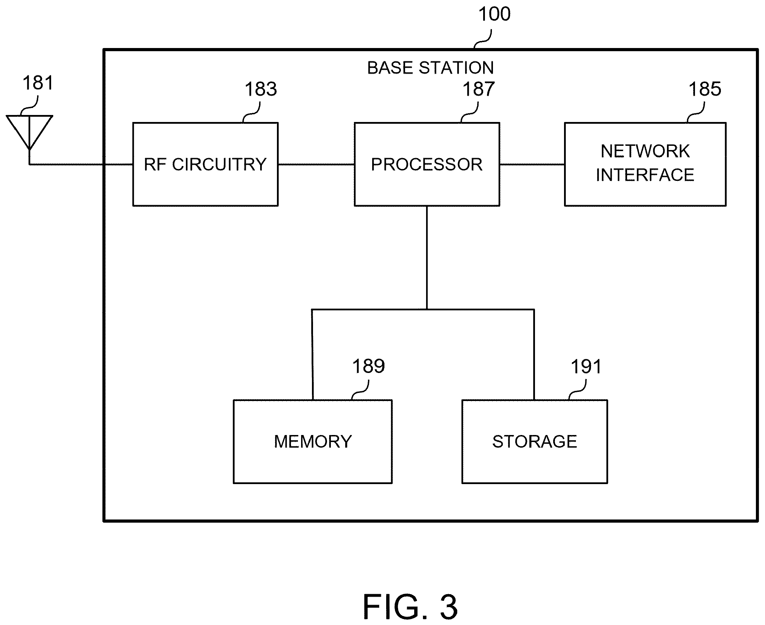

By referring to FIG. 2 and FIG. 3, an example of a structure of the base station 100 according to the embodiment of the present disclosure will be described.

### (1) Functional Structure

First, by referring to FIG. 2, an example of a functional structure of the base station 100 according to the embodiment of the present disclosure will be described. The base station 100 includes a radio communication section 110, a network communication section 120, a storage section 130, and a processing section 140.

The radio communication section 110 transmits and receives a signal via radio. For example, the radio communication section 110 receives a signal from a UE and transmits a signal to the UE. The radio communication section 110 may be referred to as a communication section, a transmitting section, a receiving section, a transmitting/receiving section, and the like.

The network communication section 120 receives a signal from a network and transmits a signal to the network.

The storage section 130 stores various kinds of information for the base station 100.

The processing section 140 provides various functions of the base station 100. The processing section 140 may include an information acquisition section 141 and a communication processing section 143. The processing section 140 may further include components other than these components. In other words, the processing section 140 may also perform operations other than the operations of these components.

For example, the processing section 140 (communication processing section 143) communicates with a UE (for example, the UE 30, the UE 40, and the UE 200) via the radio communication section 110. For example, the processing section 140 (communication processing section 143) communicates with a core network node and another base station via the network communication section 120. The processing section 140 (information acquisition section 141) acquires information necessary for the processing of the communication processing section 143, based on information received via the radio communication section 110 or the network communication section 120. The processing section 140 may be referred to as a control section.

### (2) Hardware Structure

Next, by referring to FIG. 3, an example of a hardware structure of the base station 100 according to the embodiment of the present disclosure will be described. The base station 100 includes an antenna 181, RF (radio frequency) circuitry 183, a network interface 185, a processor 187, a memory 189, and a storage 191.

The antenna 181 converts a signal to radio waves and emit the radio waves to a space. The antenna 181 also receives radio waves in a space and converts the radio waves to a signal. The antenna 181 may include a transmitting antenna and a receiving antenna or may be a single antenna for transmission and reception. The antenna 181 may be a directional antenna and may include a plurality of antenna elements.

The RF circuitry 183 performs analog processing on a signal transmitted or received via the antenna 181. The RF circuitry 183 may include a high-frequency filter, an amplifier, a modulator, a lowpass filter, and the like. The RF circuitry 183 may perform amplification, filtering, demodulation to a baseband signal, and the like, on a received signal on a signal in a radio frequency band and output a resultant signal to the processor 187. The RF circuitry 183 may perform modulation to a radio frequency band, filtering, amplification, and the like, on a baseband signal input from the processor 187 and transmit a signal in a radio frequency band via the antenna 181.

The network interface 185 is a network adapter, for example, and transmits a signal to a network and receives a signal from the network.

The processor 187 performs digital processing on a signal transmitted or received via the antenna 181 and the RF circuitry 183. The digital processing includes processing of the RAN protocol stack. The processor 187 also performs processing on a signal transmitted or received via the network interface 185. The processor 187 may include a plurality of processors or may be a single processor. The plurality of processors may include a baseband processor that performs the above digital processing and one or more processors that perform another kind(s) of processing.

The memory 189 is a computer-readable non-transitory recording medium and stores a program executed by the processor 187, parameters related to the program, and various kinds of other information. The memory 189 may include at least one of a ROM (read only memory), an EPROM (erasable programmable read only memory), an EEPROM (electrically erasable programmable read only memory (registered trademark)), a RAM (random access memory), and a flash memory. The memory 189 may entirely or partially be included in the processor 187.

The storage 191 is a computer-readable non-transitory recording medium and stores various kinds of information. The storage 191 may include at least one of an SSD (solid state drive) and an HDD (hard disc drive).

The radio communication section 110 may be implemented by the antenna 181 and the RF circuitry 183. The network communication section 120 may be implemented by the network interface 185. The storage section 130 may be implemented by the storage 191. The processing section 140 may be implemented by the processor 187 and the memory 189.

The processing section 140 may partially or entirely be virtualized. In other words, the processing section 140 may partially or entirely be implemented as a virtual machine. In this case, the processing section 140 may partially or entirely operate as a physical machine (i.e., hardware) including a processor and a memory and a virtual machine on hypervisor.

In consideration of the above hardware structure, the base station 100 may include a memory that stores a program (i.e., the memory 189) and one or more processors that can execute the program (i.e., the processor 187), and the one or more processors may execute the program to perform the operation of the processing section 140. The program may be a program for causing the processor(s) to perform the operation of the processing section 140.

### <3. Structure of User Equipment>

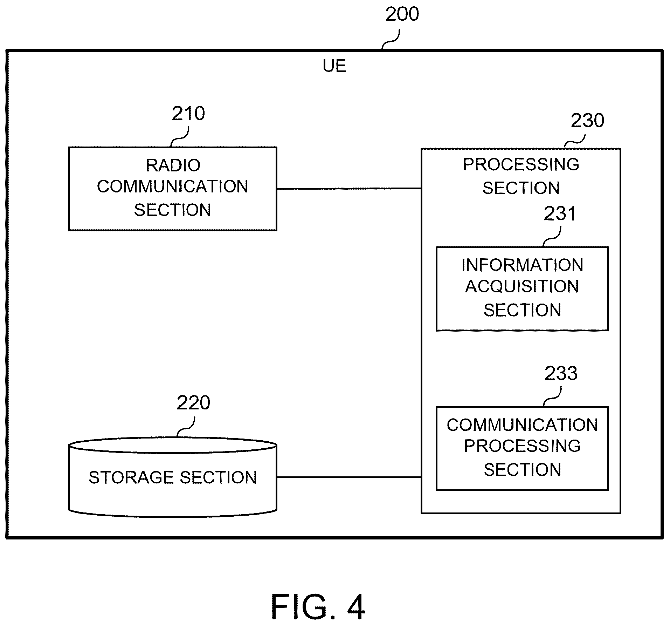

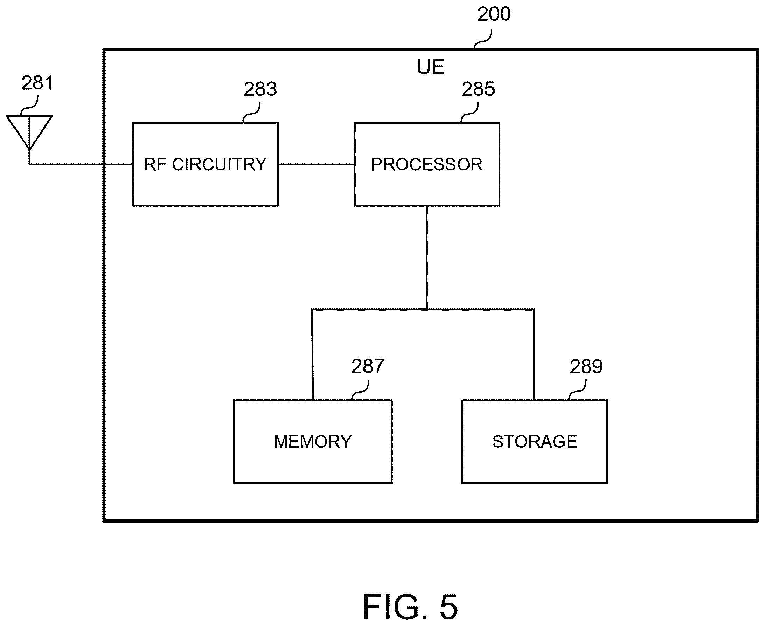

By referring to FIG. 4 and FIG. 5, an example of a structure of the UE 200 according to the embodiment of the present disclosure will be described.

### (1) Functional Structure

First, by referring to FIG. 4, an example of a functional structure of the UE 200 according to the embodiment of the present disclosure will be described. The UE 200 includes a radio communication section 210, a storage section 220, and a processing section 230.

The radio communication section 210 transmits and receives a signal via radio. For example, the radio communication section 210 receives a signal from a base station and transmits a signal to the base station. The radio communication section 210 may be referred to as a communication section, a transmitting section, a receiving section, a transmitting/receiving section, and the like.

The storage section 220 stores various kinds of information for the UE 200.

The processing section 230 provides various functions of the UE 200. The processing section 230 may include an information acquisition section 231 and a communication processing section 233. The processing section 230 may further include components other than these components. In other words, the processing section 230 may also perform operations other than the operations of these components.

For example, the processing section 230 (communication processing section 233) communicates with a base station (for example, the base station 100) via the radio communication section 210. The processing section 230 (information acquisition section 231) acquires information necessary for the processing of the communication processing section 233, based on information received via the radio communication section 210. The processing section 230 may be referred to as a control section.

### (2) Hardware Structure

Next, by referring to FIG. 5, an example of a hardware structure of the UE 200 according to the embodiment of the present disclosure will be described. The UE 200 includes an antenna 281, RF circuitry 283, a processor 285, a memory 287, and a storage 289.

The antenna 281 converts a signal to radio waves and emit the radio waves to a space. The antenna 281 also receives radio waves in a space and converts the radio waves to a signal. The antenna 281 may include a transmitting antenna and a receiving antenna or may be a single antenna for transmission and reception. The antenna 281 may be a directional antenna and may include a plurality of antenna elements.

The RF circuitry 283 performs analog processing on a signal transmitted or received via the antenna 281. The RF circuitry 283 may include a high-frequency filter, an amplifier, a modulator, a lowpass filter, and the like. The RF circuitry 283 may perform amplification, filtering, demodulation to a baseband signal, and the like, on a received signal on a signal of a radio frequency band and output a resultant signal to the processor 285. The RF circuitry 283 may perform modulation to a radio frequency band, filtering, amplification, and the like, on a baseband signal input from the processor 285 and transmit a signal in a radio frequency band via the antenna 281.

The processor 285 performs digital processing on a signal transmitted or received via the antenna 281 and the RF circuitry 283. The digital processing includes processing of the RAN protocol stack. The processor 285 may include a plurality of processors or may be a single processor. The plurality of processors may include a baseband processor that performs the above digital processing and one or more processors that perform another kind(s) of processing.

The memory 287 is a computer-readable non-transitory recording medium and stores a program executed by the processor 285, parameters related to the program, and various kinds of other information. The memory 287 may include at least one of a ROM, an EPROM, an EEPROM, a RAM, and a flash memory. The memory 287 may entirely or partially be included in the processor 285.

The storage 289 is a computer-readable non-transitory recording medium and stores various kinds of information. The storage 289 may include at least one of an SSD and an HDD.

The radio communication section 210 may be implemented by the antenna 281 and the RF circuitry 283. The storage section 220 may be implemented by the storage 289. The processing section 230 may be implemented by the processor 285 and the memory 287.

The processing section 230 may be implemented by an SoC (System on Chip) including the processor 285 and the memory 287. The SoC may include the RF circuitry 283, and the radio communication section 210 may also be implemented by the SoC.

In consideration of the above hardware structure, the UE 200 may include a memory that stores a program (i.e., the memory 287) and one or more processors that can execute the program (i.e., the processor 285), and the one or more processors may execute the program to perform the operation of the processing section 230. The program may be a program for causing the processor(s) to perform the operation of the processing section 230.

### <4. Operation Examples>

Examples of operations of the base station 100 and the UE 200 according to the embodiment of the present disclosure will be described below. A communication method (radio communication method) for the base station 100 and the UE 200 to be described below may be applied to the system 1 described above.

In the following description of the present disclosure, reference signs are omitted in some cases. For example, a base station in the following description may mean the base station 100. A UE in the following description and at least one of the UEs 30, 40, and 200 may be interchangeably interpreted.

Each "base station" in the following description and one or more of the functional blocks (for example, the radio communication section 110 and the processing section 140) or the hardware configurations (for example, the RF circuitry 183 and the processor 187) of the base station 100 may be interchangeably interpreted. Each "UE" in the following description and one or more of the functional blocks (for example, the radio communication section 210 and the processing section 230) or the hardware configurations (for example, the RF circuitry 283 and the processor 285) of the UE 200 may be interchangeably interpreted.

### (1) Overview of Bandwidth Part (BWP)

First, an overview of a BWP in Rel-15, 16, or 17 NR will be described.

For reduction of power consumption and effective use of a wideband carrier of a UE, a BWP is defined. Examples of such a BWP include initial BWPs (initial downlink (DL) BWP and initial uplink (UL) BWP) and dedicated BWPs (dedicated DL BWP and dedicated UL BWP). The UE is configured with up to four DL BWPs and up to four UL BWPs in one given serving cell according to the capability of the UE. In the present disclosure, a DL BWP and a UL BWP are simply referred to as a BWP when no distinction is needed. In other words, a "BWP" in the present disclosure and a DL BWP and/or a UL BWP may be interchangeably interpreted. A serving cell is also referred to simply as a cell.

### (1.1) Overview of Initial BWP

An initial BWP is a BWP used at least for initial access. The initial BWP may be used commonly by a plurality of UEs. For each of an initial DL BWP and an initial UL BWP, a BWP identifier (bwp-id) is defined as "0."

Initial BWPs have two types: an initial BWP derived and configured by a master information block (MIB) transmitted on a physical broadcast channel (PBCH); and an initial BWP configured by a system information block (SIB), concretely, system information block 1 (SIB1).

An initial BWP configured by an MIB may have a bandwidth corresponding to control resource set (CORESET) #0 configured by using a parameter included in the MIB. A CORESET may correspond to time frequency resources for searching for downlink control information (DCI). CORESET #0 is a CORESET with ID = #0 and is also referred to as a CORESET for Type-0 physical downlink channel (Physical Downlink Control Channel (PDCCH) common search space (CSS) set). CORESET #0 corresponds to a CORESET used by a UE for monitoring a PDCCH for scheduling SIB1.

The initial BWP configured by SIB1 is specified based on an initialDownlinkBWP field related to an initial DL BWP, an initialUplinkBWP field related to an initial UL BWP, and the like in SIB1. Concretely, these fields include BWP information elements including a parameter locationAndBandwidth, subcarrierSpacing, cyclicPrefix, and the like. For example, the location and the bandwidth in the frequency domain are specified by the parameter locationAndBandwidth, subcarrier spacing (SCS) for the BWP is specified by the parameter subcarrierSpacing, and a cyclic prefix used for each channel and reference signal in the BWP is specified by the parameter cyclicPrefix.

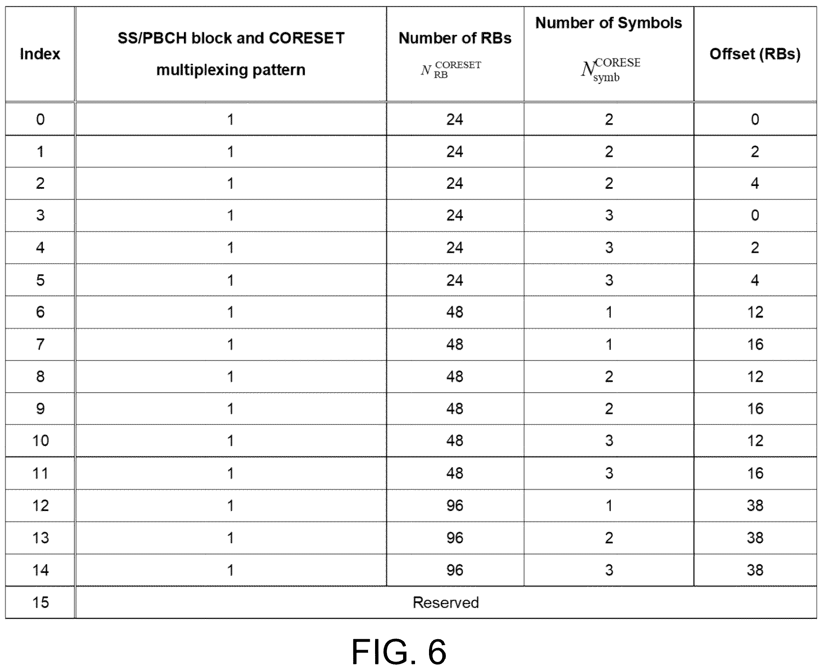

FIG. 6 is a diagram to show an example of correspondence between values of controlResourceSetZero, which is a parameter included in pdcch-ConfigSIB1 included in an MIB, and parameters corresponding to CORESET #0.

This example shows the correspondence in a case where the maximum channel bandwidth is 5 MHz or 10 MHz and SCS of each of a synchronization signal block (SSB) and a PDCCH is 15 kHz. The SSB may be referred to as an SS/PBCH block.

A value of the parameter controlResourceSetZero is an index value from 0 to 15. The UE identifies corresponding CORESET #0 parameters (for example, the number of resource blocks, the number of symbols, and the like) from the index value by using the above correspondence.

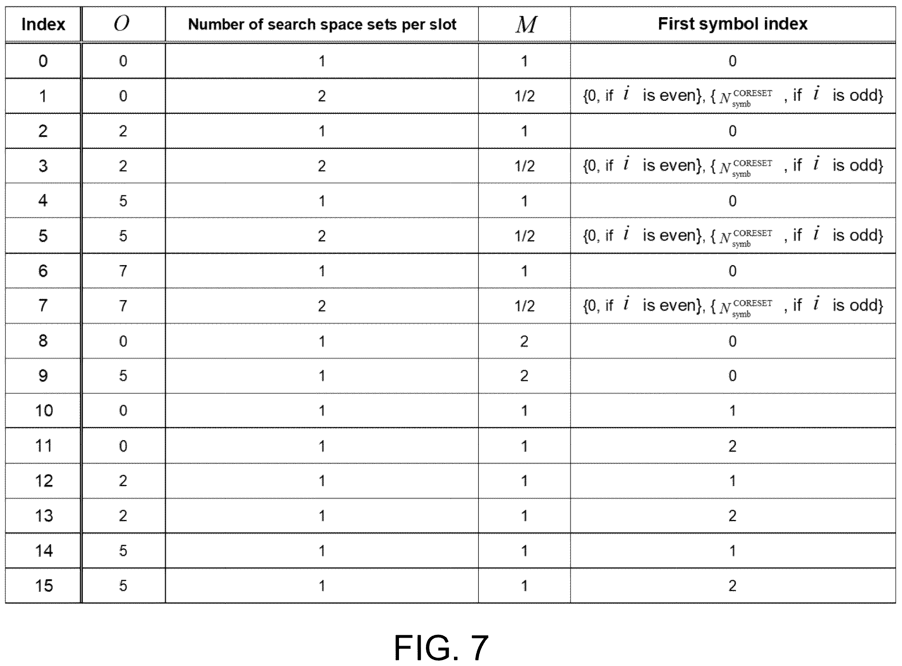

FIG. 7 is a diagram to show an example of correspondence between values of searchSpaceZero, which is a parameter included in pdcch-ConfigSIB1 included in an MIB, and parameters corresponding to search space set #0. Search space set #0 is a search space set with ID = #0 and is associated with CORESET #0.

A value of the parameter searchSpaceZero is an index value from 0 to 15. The UE identifies corresponding search space set #0 (for example, the number of search space sets per slot and/or a first symbol index and the like) from the index value by using the above correspondence.

Correspondence as those in FIG. 6 and FIG. 7 are defined in a technical specification in advance, and the UE knows the correspondence.

At initial access to a cell, a UE that has received an SSB of the cell acquires the bandwidth (24, 48, or 96 resource blocks) of a Type-0 PDCCH CSS set, from a configured value of controlResourceSetZero (integer value from 0 to 15) in pdcch-ConfigSIB1, which is an information element included in a PBCH (MIB) of the SSB. The UE may then monitor the Type-0 PDCCH CSS set to acquire SIB1 and acquire, from the SIB1, locationAndBandwidth, which is a parameter indicating the frequency location and/or bandwidth of an initial BWP. Here, the Type-0 PDCCH CSS set corresponds to search space set #0.

For example, the UE may use, as an initial BWP, a bandwidth based on an initial BWP configured by the MIB, i.e., the bandwidth based on CORESET #0, until the UE receives message 4 (Msg.4) in a random access (RA) procedure in the initial access. After reception of Msg.4, the UE may use, as an initial BWP, a bandwidth configured by locationAndBandwidth in SIB1. Msg.4 may be an RRCSetup message, an RRCResume message, or an RRCReestablishment message. The UE changes, for example, from an RRC idle state to an RRC connected state by such initial access (RA procedure).

When SIB1 includes no information indicating an initial DL BWP, an initial DL BWP may be the same as the band of CORESET (control resource set) #0 for scheduling the SIB1. In other words, the base station 100 may include no information indicating an initial DL BWP in SIB1, and the UE 30 may regard, as an initial DL BWP, the band of CORESET #0 when the information is absent in SIB1.

In Rel-17 NR, an initial BWP for RedCap UE is introduced. The initial BWP for RedCap UE may be referred to as a RedCap-specific initial BWP. A normal UE (UE 30) that is not a RedCap UE does not use the RedCap-specific initial BWP, and a RedCap UE (for example, the UE 40) can use the RedCap-specific initial BWP.

The RedCap-specific initial BWP may include an initial DL BWP for RedCap UE and an initial UL BWP for RedCap UE. Here, the initial DL BWP for RedCap UE may be referred to as a RedCap-specific initial DL BWP, while the initial UL BWP for RedCap UE may be referred to as a RedCap-specific initial UL BWP. For each of the RedCap-UE-specific initial DL BWP and the RedCap-UE-specific initial UL BWP, a BWP identifier (bwp-id) is defined as "0."

Information related to the RedCap-specific initial BWP may be initialDownlinkBWP-RedCap-r17 and/or initialUplinkBWP-RedCap-r17 included in a ServingCellConfigCommonSIB information element in SIB1. These parameters may include at least one of a parameter indicating the location and bandwidth of the RedCap-specific BWP, a parameter indicating SCS, a parameter indicating a cyclic prefix, and the like similarly to initialDownlinkBWP, initialUplinkBWP, and the like described above. The ServingCellConfigCommonSIB information element may indicate a serving-cell-common configuration InitialDownlinkBWP-RedCap-r17 and/or initialUplinkBWP-RedCap-r17 may include a parameter for the RedCap-specific initial BWP (for example, a parameter used in the RedCap-specific initial BWP).

For example, the UE 30, which is a normal UE, receives SIB1, and determines an initial BWP, based on ServingCellConfigCommonSIB included in the SIB1. For example, the UE 30 identifies the initial DL BWP, based on initialDownlinkBWP. The UE 30 identifies the initial UL BWP, based on initialUplinkBWP.

For example, the UE 40, receives SIB1, and determines an initial BWP, based on ServingCellConfigCommonSIB included in the SIB1. For example, the UE 40 identifies the initial DL BWP, based on information indicating a RedCap-specific initial DL BWP (initialDownlinkBWP-RedCap-r17) included in ServingCellConfigCommonSIB. The UE 40 also identifies the initial UL BWP, based on information indicating a RedCap-specific initial UL BWP (initialUplinkBWP-RedCap-r17) included in ServingCellConfigCommonSIB.

When the information indicating a RedCap-specific initial DL BWP is not included in the SIB1, the RedCap-specific initial DL BWP may be identified based on the information indicating an initial DL BWP. When the information indicating a RedCap-specific initial UL BWP is not included in the SIB1, the RedCap-specific initial UL BWP may be identified based on the information indicating an initial UL BWP.

Specifically, when initialDownlinkBWP-RedCap-r17 is included in the SIB1, the UE 40 may identify a RedCap-specific initial DL BWP, based on initialDownlinkBWP-RedCap-r17 instead of initialDownlinkBWP. When initialUplinkBWP-RedCap-r17 is included in the SIB1, the UE 40 may identify a RedCap-specific initial UL BWP, based on initialUplinkBWP-RedCap-r17 instead of initialUplinkBWP.

When no initialDownlinkBWP-RedCap-r17 is included in the SIB1, the UE 40 may identify an initial DL BWP (which may be a RedCap-specific initial DL BWP), based on initialDownlinkBWP. When no initialUplinkBWP-RedCap-r17 is included in the SIB1, the UE 40 may identify an initial UL BWP (which may be a RedCap-specific initial UL BWP), based on initialUplinkBWP.

### (1.2) Overview of Dedicated BWP

A dedicated BWP is a BWP configured for a given UE in a dedicated manner (UE-specific manner). For a dedicated BWP, bwp-id other than "0" may be configured. For example, a dedicated DL BWP and a dedicated UL BWP may be individually configured based on a BWP-Downlink information element and a BWP-Uplink information element included in a ServingCellConfig information element in an RRC message that is dedicated signaling transmitted from a base station to a UE. For example, each of BWP-Downlink and BWP-Uplink may include various parameters (locationAndBandwidth, subcarrierSpacing, cyclicPrefix) for configuring the BWP. For example, each of BWP-Downlink and BWP-Uplink may include a parameter of the BWP (for example, a parameter used in the BWP).

A dedicated BWP may be interpreted as an RRC Configured BWP, a Configured BWP, a UE-specific BWP, a dedicated BWP, simply a BWP, and the like, and vice versa.

The base station can notify the UE of a BWP to be used for communication with the base station (i.e., an active BWP) among one or a plurality of BWPs configured for the UE. For example, the base station can transmit, to the UE, a BWP to be activated at the time when configuration is performed, i.e., a BWP identifier indicating a BWP to be used first in communication with the base station. For example, switch by a PDCCH (DCI), RRC signaling, a MAC control element (MAC CE), or a timer is used for control of switch from an active BWP to a BWP that is not an active BWP (inactive BWP) and switch from an inactive BWP to an active BWP.

Communication in an active BWP may include at least one of transmission on an uplink shared channel (UL-SCH) in the BWP, transmission on a random access channel (RACH) in the BWP (when a physical random access channel (PRACH) occasion is configured), monitoring of a physical downlink control channel (PDCCH) in the BWP, transmission on a physical uplink control channel (PUCCH) in the BWP (when a PUCCH resource is configured), reporting of channel state information (CSI) for the BWP, and reception of a downlink shared channel (DL-SCH) in the BWP.

Here, a UL-SCH is a transport channel and is mapped to a physical uplink shared channel (PUSCH), which is a physical channel. Data transmitted on a UL-SCH is also referred to as UL-SCH data. For example, the UL-SCH data may correspond to uplink user data. A DL-SCH is a transport channel and is mapped to a physical downlink shared channel (PDSCH), which is a physical channel. Data transmitted on a DL-SCH is also referred to as DL-SCH data. For example, the DL-SCH data may correspond to downlink user data.

A PUCCH is used to transmit uplink control information (UCI). For example, the uplink control information includes an HARQ (Hybrid Automatic Repeat reQuest)-ACK, CSI, and/or a scheduling request (SR). The HARQ-ACK includes a positive acknowledgment (ACK) or a negative acknowledgment (NACK). For example, the PUCCH is used for transmission of an HARQ-ACK for a PDSCH (for example, a DL-SCH (DL-SCH data, downlink user data)). Here, DL-SCH data and/or downlink user data is also referred to as a downlink transport block.

The UE monitors a set of PDCCH candidates in one or a plurality of CORESETs in an active DL BWP, for example. The monitoring of PDCCHs may include decoding of each of the PDCCH candidates according to a downlink control information (DCI) format for the monitoring. Here, the UE may monitor a DCI format to which CRC (also referred to as Cyclic Redundancy Check and CRC parity bits) scrambled by an RNTI (Radio Network Temporary Identifier) configured by the base station is added. Here, the RNTI may include an SI-RNTI (System Information-RNTI), an RA-RNTI (Random Access RNTI), a TC-RNTI (Temporary C-RNTI), a P-RNTI (Paging RNTI), and/or a C-RNTI (Cell-RNTI). The set of PDCCH candidates monitored by the UE may be defined as a search space set for the PDCCHs. The search space set may include a common search space set(s) (CSS set(s)) and/or a UE-specific search space set(s) (USS set(s)). Hence, the base station may configure a CORESET and/or a search space set(s) for the UE, and the UE may monitor PDCCHs in the configured CORESET and/or search space set(s).

The base station 100 may configure one or a plurality of DL BWPs for one UE in one serving cell. In this case, one DL BWP among the one or plurality of DL BWPs is used by the UE as an active DL BWP. For example, the RRC message (ServingCellConfig) includes an information element indicating the first active DL BWP, and the UE uses the DL BWP indicated by the information, first as an active DL BWP. The information element is firstActiveDownlinkBWP-ld. The active DL BWP may be switched.

For example, the base station 100 transmits, to a UE, DCI including information indicating a DL BWP, and the UE switches an active DL BWP to the DL BWP indicated by the information. The DCI is DCI used for scheduling of a PDSCH (for example, DCI format 1_1), and the information is a Bandwidth Part Indicator.

For example, when a timer related to BWP expires, the UE switches an active DL BWP to a default DL BWP. For example, the RRC message includes an information element indicating the default DL BWP, and the UE uses the DL BWP indicated by the information, as a default DL BWP. The timer is bwp-InactivityTimer, and the information element is defaultDownlinkBWP-ld. The default DL BWP may be a dedicated BWP or an initial BWP (for example, when no information element indicating a default DL BWP is included, the initial DL BWP may be a default DL BWP).

The base station 100 may configure one or a plurality of UL BWPs for one UE in one serving cell. In this case, one UL BWP among the one or plurality of UL BWPs is used by the UE as an active UL BWP. For example, the RRC message includes an information element indicating the first active UL BWP, and the UE first uses the UL BWP indicated by the information, as an active UL BWP. The information element is firstActiveUplinkBWP-ld. The active UL BWP may be switched. For example, the base station 100 transmits, to a UE, DCI including information indicating a UL BWP, and the UE switches an active UL BWP to the UL BWP indicated by the information. The DCI is DCI used for scheduling of a PUSCH (for example, DCI format 0_1), and the information is a Bandwidth Part Indicator.

An active DL BWP and switch of an active DL BWP or the like may further be controlled by a MAC (Medium Access Control) entity.

### (2) Overview of RedCap UE and eRedCap UE

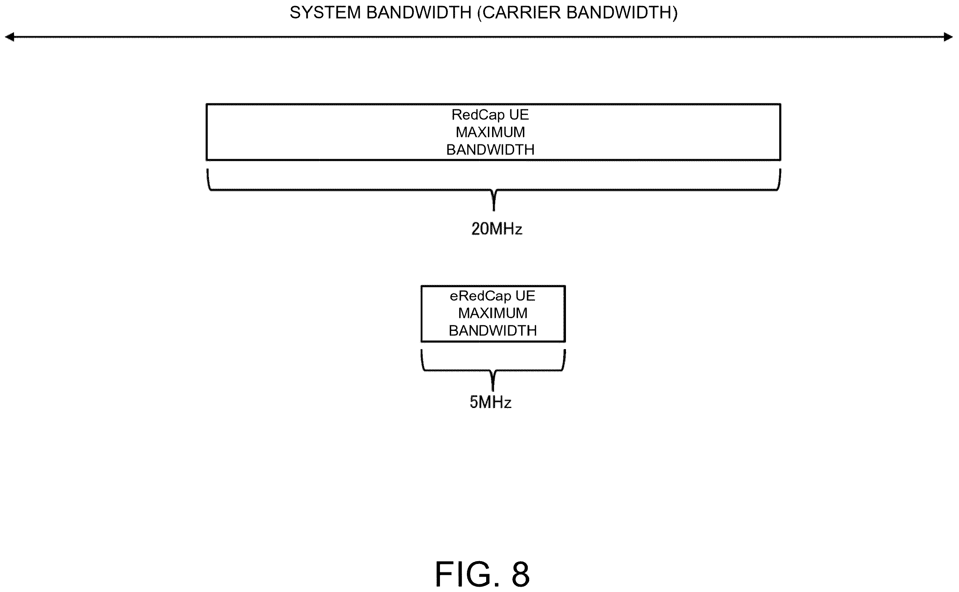

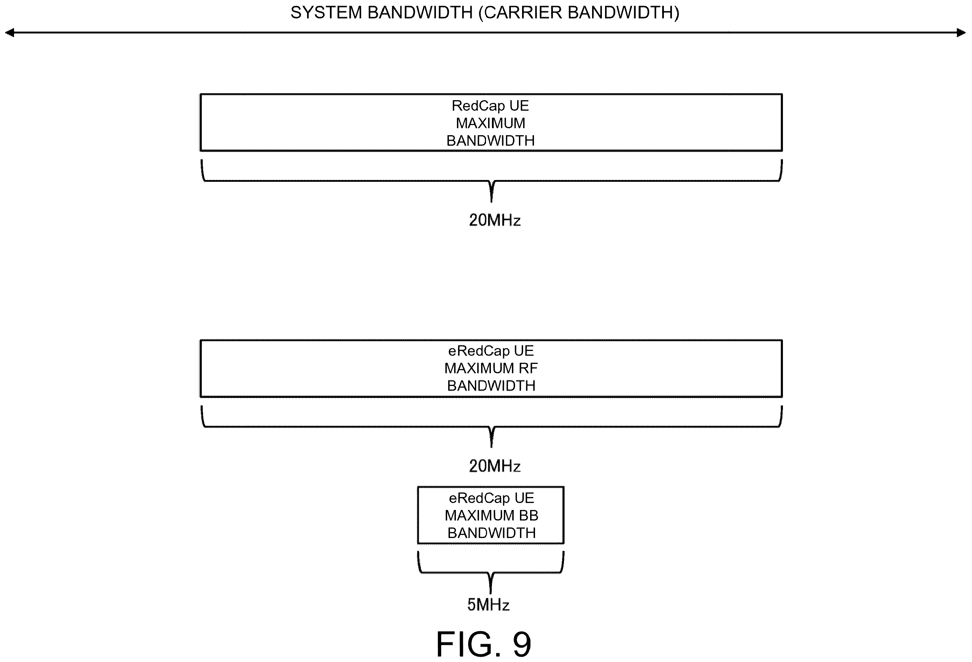

Next, by referring to FIG. 8 and FIG. 9, differences between a RedCap UE (UE 40) and an eRedCap UE (UE 200) will be described.

In Release 17 of the 3GPP technical specifications, a RedCap UE is introduced as a UE type with reduced performance suitable for use cases such as industrial sensors, monitoring cameras, and wearables. The RedCap UE is also referred to as a "Reduced capability NR device." The RedCap UE is a UE type (terminal type) with reduced apparatus cost and complexity compared with a general UE type. The RedCap UE is in a middle range for IoT in terms of performance and price, and is configured, for example, with a narrow maximum bandwidth to be used for radio communication and a smaller number of receivers compared with those of a general UE type. As shown in FIG. 8, a bandwidth that can be supported by a RedCap UE for FR1 (i.e., the maximum bandwidth supported by the RedCap UE) may be 20 MHz.

In Release 18 of the 3GPP technical specifications, it is studied to introduce a new UE type with further reduced complexity than that of a RedCap UE. Such a new UE type is assumed to have performance between a RedCap UE introduced in Release 17 and an LTE LPWA. Such a new UE type may be referred to as an "eRedCap UE."

The eRedCap UE has a narrower maximum bandwidth to be used for radio communication than that of a RedCap UE. The eRedCap UE may correspond to a certain UE type (certain terminal type) with a reduced frequency bandwidth that can be supported at least for a data channel compared with that of a RedCap UE. Here, the data channel is a physical channel that transmits data and may mean a PDSCH and/or a PUSCH, for example.

The maximum bandwidth for a given physical channel (for example, a PDSCH and/or a PUSCH) or all physical channels usable by the eRedCap UE may be referred to as a reduced bandwidth. The reduced bandwidth may correspond to a bandwidth smaller than 20 MHz or may be X MHz (X may be an integer or a decimal, for example, X may be 0.5, 1, 2, 3, 4, 5, or the like (X = 0.5, 1, 2, 3, 4, 5, or the like)). A reduced bandwidth and a further reduced bandwidth may be interchangeably interpreted.

20 MHz may be interpreted as a maximum bandwidth usable by a RedCap UE, a specific bandwidth, and the like, and vice versa. In the present disclosure, 20 MHZ and any bandwidth value may be interchangeably used.

The specific bandwidth may correspond to at least one of the following:
- size of an eRedCap-specific initial DL BWP
- value determined based on the location, size, and SCS of an eRedCap-specific initial DL BWP
- size of an eRedCap-specific initial UL BWP
- value determined based on the location, size, and SCS of an eRedCap-specific initial UL BWP

For example, the specific bandwidth may be 15 RBs (corresponding to approximately 3 MHz), 20 RBs (corresponding to approximately 4 MHz), 25 RBs (corresponding to approximately 5 MHz), or the like when the SCS is 15 KHz.

The specific bandwidth may be 8 RBs (corresponding to approximately 3 MHz), 10 RBs (corresponding to approximately 4 MHz), 11 and/or 12 RBs (corresponding to approximately 5 MHz), or the like when the SCS is 30 KHz. In other words, a specific size of the specific bandwidth may be used for size calculation of DCI format 1_0 monitored in a CSS. For example, the base station may configure the size of an eRedCap-specific initial DL BWP to be equal to a specific value (for example, 25 RBs corresponding to approximately 5 MHz) or smaller than the specific value (for example, 25 RBs corresponding to approximately 5 MHz). In other words, the specific bandwidth may be a value equal to 25 RBs or smaller than 25 RBs.

The reduced bandwidth may be a BWP and may be referred to as a BWP of an eRedCap UE. However, the reduced bandwidth is not limited to a BWP and may correspond to at least one of one or more subcarriers, one or more resource elements, one or more subbands, one or more resource blocks (RBs), one or more physical RBs (PRBs), one or more resource block sets, one or more frequency bands, one or more frequency resources, one or more frequency-domain resources, and the like.

For the eRedCap UE, the following proposals are made: (a) to reduce a frequency bandwidth that can be supported in FR1, to the reduced bandwidth; and (b) to reduce a frequency bandwidth for a data channel in FR1 in order to reduce a peak data rate. UE cost reduction methods other than these, for example, to reduce a peak rate while maintaining a bandwidth that can be supported by each of a BB section and an RF section at 20 MHz, to reduce a UE processing time related to a data channel, and the like are also proposed.

As shown in FIG. 8, the method of (a) above can reduce a bandwidth that can be supported by each of both an RF section (for example RF circuitry) and a BB section (for example, a baseband processor) of the UE 200 (i.e., a maximum bandwidth), to reduce complexity of the RF section and the BB section. However, a configuration of an SSB in Rel-17 or earlier NR may not be able to use a configuration of CORESET #0 and the like, which increases complexity of specifications.

Meanwhile, as shown in FIG. 9, the method of (b) above can reduce a bandwidth that can be supported by the BB section and reduce complexity of the BB section while maintaining the bandwidth that can be supported by the RF section of the UE 200 at 20 MHz. The example in FIG. 9 shows an example where the maximum RF bandwidth being a frequency bandwidth that can be supported by the RF section of the UE 200 is 20 MHz, and the maximum BB bandwidth being a frequency bandwidth that can be supported by the BB section of the UE 200 is the reduced bandwidth (for example, 5 MHz). The maximum RF bandwidth may be 20 MHz only for a PDSCH and a PUSCH, and the maximum BB bandwidth may be the reduced bandwidth (for example, 5 MHz). For other physical channels and signals, the maximum RF bandwidth and the maximum BB bandwidth may each be a bandwidth up to 20 MHz (maximum UE bandwidth).

The reduced bandwidth may be a bandwidth in which the BB section performs processing, a bandwidth in which the eRedCap UE processes a data channel, a bandwidth in which the eRedCap UE performs decoding processing on PDSCHs at a time, or a data processing bandwidth based on the data processing capability of the eRedCap UE. In this embodiment, performing processing at a time (executing processing) may include executing processing in a time length defined in advance. For example, performing processing at a time (executing processing) may include executing processing in one given slot and/or one given symbol. Here, the bandwidth in which the BB section performs processing is also referred to as a BB bandwidth.

The bandwidth of a PDSCH may be equal to or smaller than the data processing bandwidth. For example, the eRedCap UE may buffer signals on PDSCHs and execute the data decoding processing on the buffered signals at a time.

The bandwidth of a PDSCH may be larger than the data processing bandwidth. For example, the eRedCap UE may buffer signals on PDSCHs each having a specific bandwidth larger than the reduced bandwidth and execute the data decoding processing on the buffered signals for each reduced bandwidth. The specific bandwidth may be a maximum bandwidth that can be used by the RedCap UE, may be the bandwidth of a BWP for control channel, or may be an RF bandwidth. When the eRedCap UE executes the data decoding processing on the PDSCHs in the specific bandwidth for each reduced bandwidth, the processing time for the data decoding processing is assumed to be longer than a processing time for a UE that can execute the data decoding processing on the PDSCHs in the specific bandwidth at once. For example, the processing time for the data decoding processing by the eRedCap UE may correspond to a plurality of slots. The processing time may be longer than the processing time for the data decoding processing by the RedCap UE, the normal UE or.

In the present disclosure, data decoding processing, data processing, reception processing, baseband (BB) processing, demodulation processing, and decoding processing may be interchangeably used.

In the following embodiment, any of the above-described cost reduction methods may be adopted for an eRedCap UE, but the method of (b) above is mainly assumed to be adopted.

In the present disclosure, the size of a BWP, the size of CORESET #0, and the like are each assumed to be expressed in the number of resource blocks (RBs), but this is not restrictive. An RB in the present disclosure may be interpreted, for example, as a subcarrier, a resource element, a subband, a resource block group, a physical resource block (PRB), and the like, which are other units related to a frequency bandwidth, and vice versa.

### (3) RA Procedure

As RA procedures, 4-step (type 1) and 2-step (type 2) contention based random access (CBRA) and contention free random access (CFRA) are defined.

In the present disclosure, Msg1, a RA preamble, and a PRACH may be interchangeably interpreted. In the present disclosure, Msg2, a RA response (RAR), and a PDCCH and a PDSCH may be interchangeably interpreted. Msg2 may be a RA response with a PDCCH and/or a PDSCH. In the present disclosure, Msg3, scheduled transmission, and a PUSCH may be interchangeably interpreted. In the present disclosure, Msg4, contention resolution, and a PDCCH and a PDSCH may be interchangeably interpreted. Msg4 may be contention resolution with a PDCCH and/or a PDSCH. In the present disclosure, MsgA, a RA preamble, and a PUSCH payload may be interchangeably interpreted. In the present disclosure, MsgB, contention resolution, and a PDCCH and a PDSCH may be interchangeably interpreted. In the present disclosure, Msg0, RA preamble assignment, and a PDCCH order may be interchangeably interpreted.

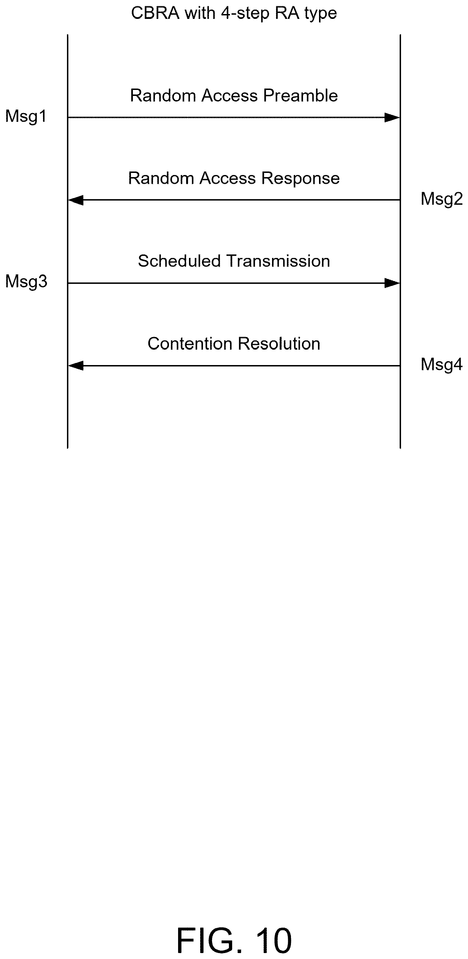

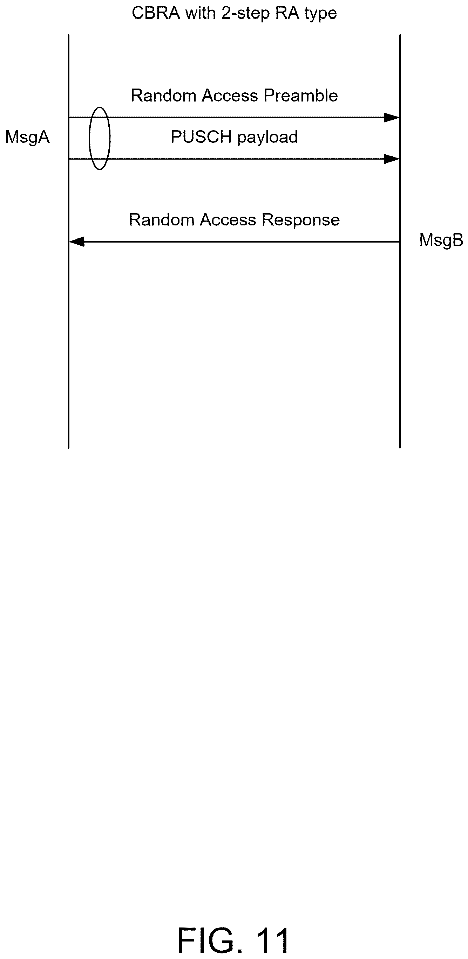

As shown in FIG. 10, in 4-step CBRA, a UE transmits Msg1, a base station transmits Msg2 in response to Msg1, the UE transmits Msg3 in response to Msg2, and the base station transmits Msg4 in response to Msg3. As shown in FIG. 11, in 2-step CBRA, a UE transmits MsgA, and a base station transmits MsgB in response to MsgA.

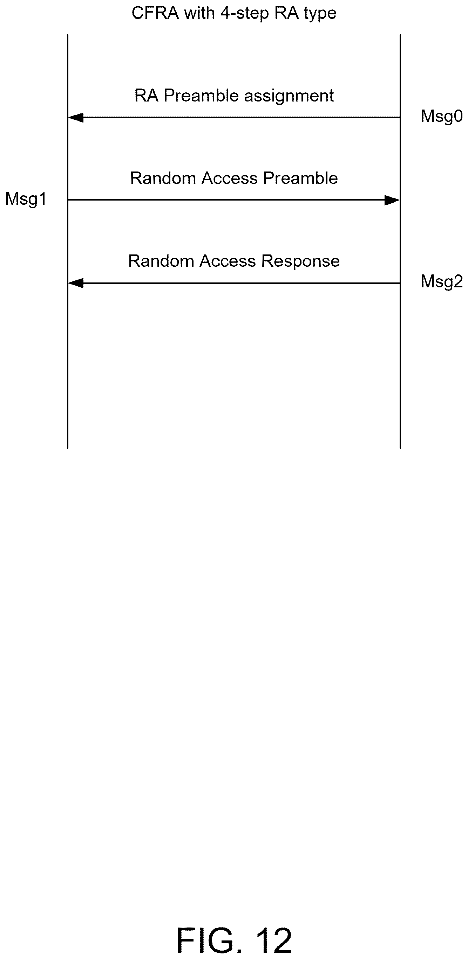

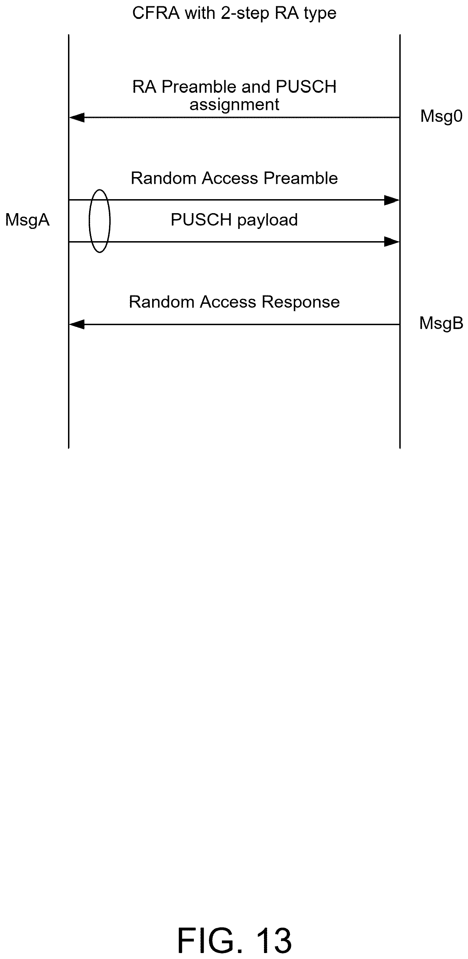

As shown in FIG. 12, in 4-step CFRA, a base station transmits Msg0, a UE transmits Msg1 in response to Msg0, and the base station transmits Msg2 in response to Msg1. As shown in FIG. 13, in 2-step CFRA, a base station transmits Msg0, a UE transmits MsgA in response to Msg0, and the base station transmits MsgB in response to MsgA.

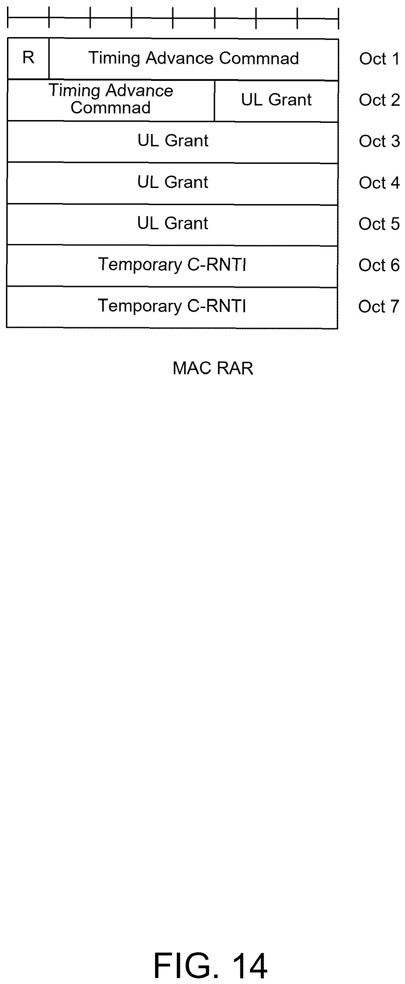

As Msg2 in 4-step RA, RA is transmitted by using a PDCCH and a PDSCH. The PDSCH is scheduled by using DCI format 1_0 scrambled by an RA-RNTI. The PDSCH includes a MAC RAR as a MAC payload. As shown in FIG. 14, the MAC payload of a MAC RAR includes a UL grant (RAR UL grant) for scheduling a PUSCH for a UL-SCH to be transmitted as Msg3.

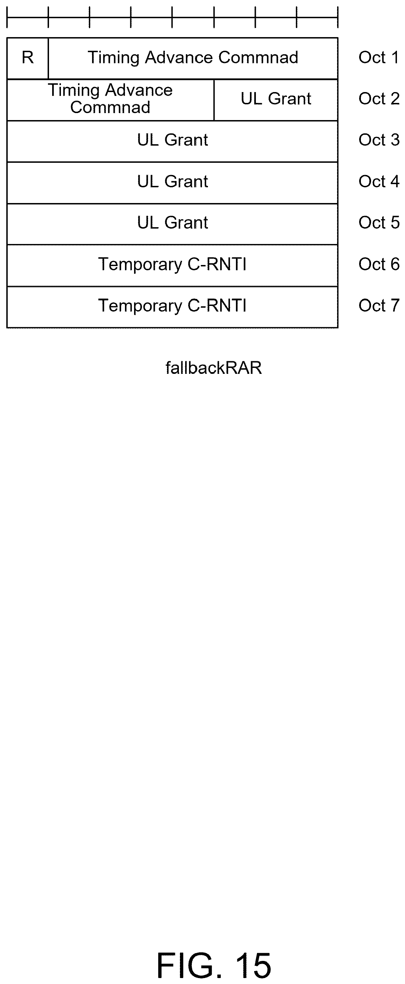

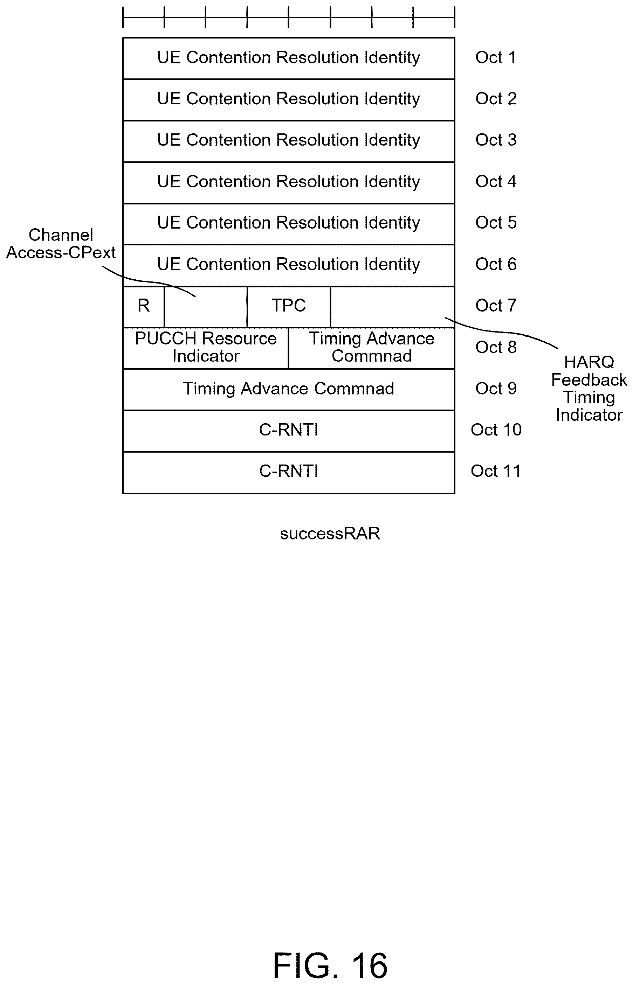

As MsgB in 2-step RA, a RAR is transmitted by using a PDCCH and a PDSCH. The PDSCH is scheduled by using DCI format 1_0 scrambled by a MsgB-RNTI. The PDSCH includes a fallback RAR (fallbackRAR) or a success RAR (successRAR) as a MAC payload. As shown in FIG. 15, similarly to the MAC RAR, a fallback RAR includes a UL grant (RAR UL grant) for scheduling a PUSCH for a UL-SCH to be transmitted as Msg3. As shown in FIG. 16, a success RAR includes a timing indicator for HARQ feedback for MsgB (PDSCH).

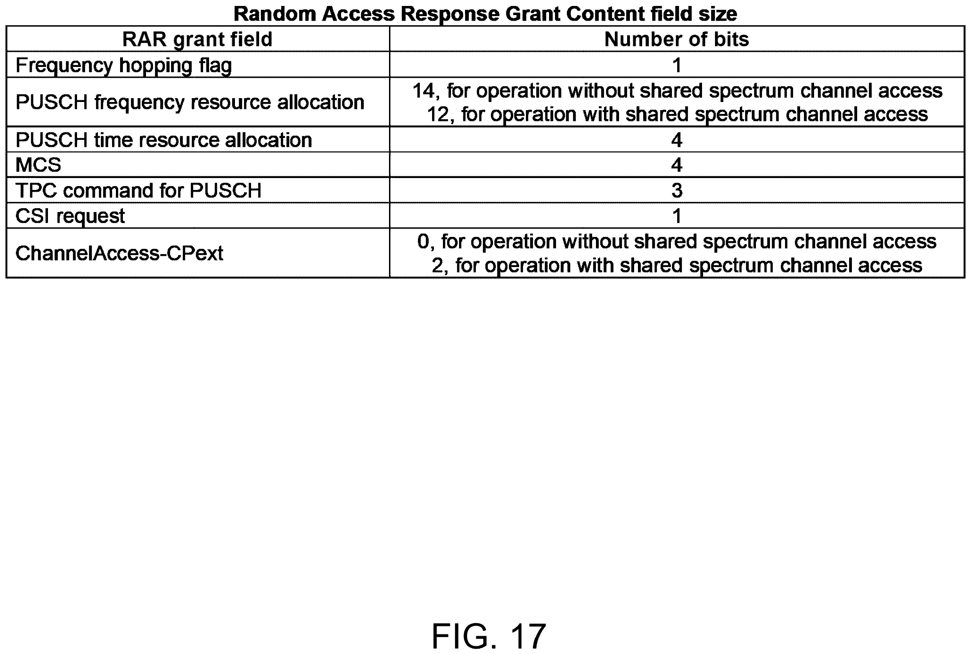

As shown in FIG. 17, a RAR UL grant includes a PUSCH time resource allocation field. The PUSCH time resource allocation field indicates timing from reception of Msg2 (PDSCH) to transmission of Msg3 (PUSCH).

When a UE has received a PDSCH (Msg2/MsgB) in a RA procedure, the UE transmits a PUSCH (Msg3) or HARQ-ACK information for the PDSCH.

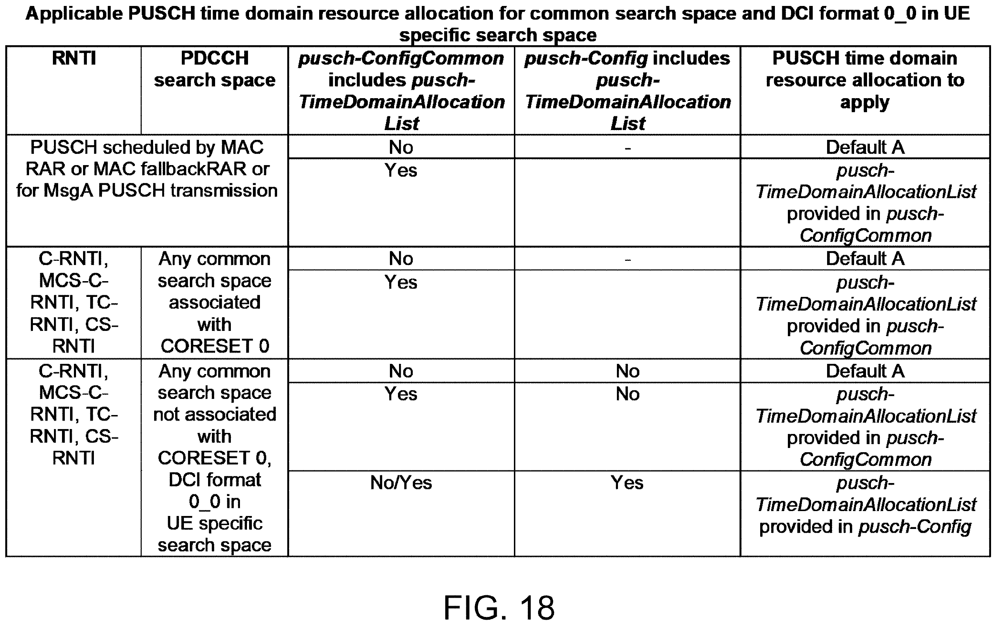

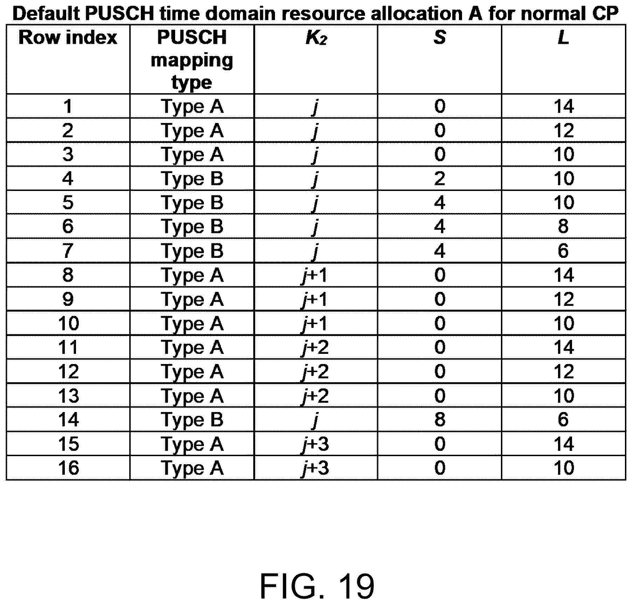

The timing of the PUSCH transmission for the PDSCH is indicated by PUSCH time resource allocation in a RAR UL grant. When no PUSCH time-domain allocation list (pusch-TimeDomainAllocationList/PUSCH-TimeDomainResourceAllocationList) is configured in a PUSCH common configuration (pusch-ConfigCommon) in SIB1, a plurality of relationships in a TDRA table (default table/default A) defined in a specification are used, as shown in FIG. 18. When pusch-TimeDomainAllocationList is configured in a PUSCH common configuration (pusch-ConfigCommon) in SIB1, a plurality of (for example, 16) relationships between a RAR UL grant and a time between the RAR UL grant and a corresponding PUSCH are configured by parameters (k2, start symbol and length (startSymbolAndLength/SLIV/S and L)) included in pusch-TimeDomainAllocationList, as shown in FIG. 19. One relationship of the plurality of relationships is indicated by a value set in 4-bit PUSCH time resource allocation included in the RAR UL grant, to thereby determine timing of the PUSCH transmission. The PUSCH time resource allocation in the RAR UL grant may be referred to as a row index of a time-domain resource allocation (TDRA) table.

Timing of HARQ feedback transmission for the PDSCH is indicated by an HARQ feedback timing indicator in the success RAR. A plurality of (for example, eight) relationships between a PDSCH with MsgB and a time between the PDSCH and HARQ feedback transmission corresponding to the PDSCH are defined in a specification. One relationship of the plurality of relationships is indicated by a value set in a 3-bit HARQ feedback timing indicator in the success RAR, to thereby determine timing of the HARQ feedback transmission.

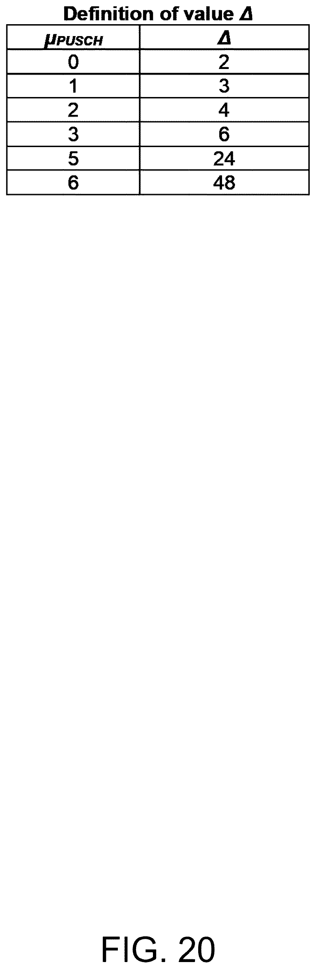

When the UE has received a PDSCH that ends in slot n with a corresponding RAR message, for PRACH transmission from the UE, the UE transmits a PUSCH in slot n + k₂ + Δ + 2^{µ} · K_{cell,offset}. Here, k₂ is given a value corresponding to the value in the PUSCH time resource allocation field in the RAR UL grant, by using time domain resource allocation A (table) defined in a specification. µ denotes a subcarrier spacing (SCS) configuration (µ_{PUSCH}) configured for a UL BWP. As shown in FIG. 20, Δ is given a value corresponding to µ, by using an association (table) defined in a specification. K_{cell,offset} takes, when given by CellSpecific_Koffset, the value, and 0 otherwise.

When a UE has received a RAR message for success RAR in response to transmission of a PRACH and a PUSCH in a type 2 RA procedure, the slot for PUCCH transmission has a value k and is indicated by an HARQ feedback timing indicator field in a success RAR. The slot is defined as n + k + Δ + 2^{µ} · K_{cell,offset}. The value k for µ ≤ 3 is {1, 2, 3, 4, 5, 6, 7, 8}, and the value k for µ = 5 is {7, 8, 12, 16, 20, 24, 28, 32}.

### (4) Msg1 Based Early Indication

A Msg1 based early indication by a RedCap UE is defined. A base station can configure a RA resource corresponding to a RedCap UE (for example, a RedCap function), by using information (featurePriorities/FeaturePriority) indicating feature priority in SIB1. The RA resource may be a RA preamble, for example. In the present disclosure, configuring a RA resource corresponding to the RedCap function may be interpreted as configuring Msg.1 based early indication.

The UE identifies, from a set of RA resources applicable to a RA procedure, a RA resource configured with a function having the highest priority assigned in functional priorities of all the functions applicable to the RA procedure.

The UE executes the RA procedure by using the RA resource corresponding to the RedCap function to thereby be able to indicate that the UE is a RedCap UE (UE supports the RedCap function). In other words, the UE can indicate that the UE itself is a RedCap UE. This operation is referred to as Msg1 based early indication.

An eRedCap UE is also assumed to perform Msg1 based early indication according to a similar mechanism as that of a RedCap UE. Hence, configuration of an eRedCap-specific RA resource and configuration of a RA resource common to RedCap and eRedCap are assumed.

However, a control method/processing method for reception of a downlink shared channel in an eRedCap UE is not clear. For example, repetition transmission (repetition) of a downlink shared channel such as SIB1, paging, or a RAR transmitted on a PDSCH. For example, a processing time for data decoding by an eRedCap UE is possibly longer than a processing time for data decoding by another UE. A control method/processing method for reception of a downlink shared channel in such a case is not clear. A control method/processing method for transmission of an uplink channel corresponding to such a downlink shared channel is not clear. Unless such control methods/processing methods are sufficiently studied, system performance may decrease.

### (5) Operation of eRedCap UE Related to Downlink Shared Channel

Operation of an eRedCap UE related to a downlink shared channel according to one embodiment of the present disclosure will be described below. In the following operation example, the eRedCap UE may be referred to simply as a UE or a terminal.

A terminal (for example, the UE 200, an eRedCap UE) may include: a communication section (for example, the radio communication section 210) that receives a first downlink shared channel for a random access procedure, in a second band narrower than a first band for a specific terminal; and a processing section (for example, the processing section 230) that processes, in a case of repetitions or decoding of the first downlink shared channel across a plurality of slots, transmission of an uplink channel in response to the first downlink shared channel or reception of a second downlink shared channel. A terminal may include: a communication section that receives a first downlink shared channel for a random access procedure, in a second band narrower than a first band for a specific terminal; and a processing section that processes, in a case of repetitions of the first downlink shared channel across a plurality of slots, transmission of an uplink channel in response to the first downlink shared channel. A terminal may include: a communication section that receives a first downlink shared channel for a random access procedure, in a second band narrower than a first band for a specific terminal; and a processing section that processes, in a case of decoding of the first downlink shared channel across a plurality of slots, transmission of an uplink channel in response to the first downlink shared channel. A terminal may include: a communication section that receives a first downlink shared channel for a random access procedure, in a second band narrower than a first band for a specific terminal; and a processing section that processes, in a case of decoding of the first downlink shared channel across a plurality of slots, reception of a second downlink shared channel. A terminal may perform a communication method of the following operation example.

In the present disclosure, a specific terminal, a normal UE, a RedCap UE, and an eRedCap UE may be interchangeably interpreted. In the present disclosure, a first band, a band or a DL BWP for reception of a PDSCH by a specific terminal, a band or a DL BWP for reception of a downlink control channel by an eRedCap UE, and a band or a DL BWP having a specific bandwidth may be interchangeably interpreted. In the present disclosure, a second band, a band or a DL BWP for reception of a downlink shared channel by an eRedCap UE, a band or a DL BWP for reception of a downlink control channel by an eRedCap UE, a band or a DL BWP having a specific bandwidth, a specific frequency band, and a reduced bandwidth may be interchangeably interpreted. The first downlink shared channel may include a RAR, include SIB1, or include paging. An uplink channel may be a PUSCH with Msg3 or HARQ feedback for a RAR. For example, the HARQ feedback for a RAR may be transmitted on a PUCCH. Processing of transmission of an uplink channel may include determination of transmission timing of the uplink channel. A second downlink shared channel may be another downlink shared channel in the band (for example, the BWP) and slot of a first downlink shared channel. Processing of reception of a second downlink shared channel may include any of not receiving the second downlink shared channel, not being requested reception of the second downlink shared channel, assuming no reception of the second downlink shared channel, and dropping the second downlink shared channel.

A base station (for example, the base station 100) may include: a transmitting section (for example, the radio communication section 110) that transmits a first downlink shared channel for a random access procedure, in a second band narrower than a first band for a specific terminal; and a processing section (for example, the processing section 140) that processes, in a case of repetitions or decoding of the first downlink shared channel across a plurality of slots, reception of an uplink channel in response to the first downlink shared channel or transmission of a second downlink shared channel. A base station may include: a transmitting section that transmits a first downlink shared channel for a random access procedure, in a second band narrower than a first band for a specific terminal; and a processing section that processes, in a case of repetitions of the first downlink shared channel across a plurality of slots, reception of an uplink channel in response to the first downlink shared channel. A base station may include: a transmitting section that transmits a first downlink shared channel for a random access procedure, in a second band narrower than a first band for a specific terminal; and a processing section that processes, in a case of decoding of the first downlink shared channel across a plurality of slots, reception of an uplink channel in response to the first downlink shared channel. A base station may include: a transmitting section that transmits a first downlink shared channel for a random access procedure, in a second band narrower than a first band for a specific terminal; and a processing section that processes, in a case of decoding of the first downlink shared channel across a plurality of slots, transmission of a second downlink shared channel.

A first case and a second case related to data decoding processing capability of an eRedCap UE or a PDSCH bandwidth will be described. The first case, a case where no data decoding processing capability of the eRedCap UE is considered, a case where the PDSCH bandwidth is equal to or smaller than a bandwidth for data decoding processing by the eRedCap UE, a case where a processing time of data decoding by the eRedCap UE is equal to a processing time of data decoding by a RedCap UE or a normal UE, a case where the PDSCH bandwidth is smaller than a BWP for downlink control channel, and a case of repetitions of a first downlink shared channel across a plurality of slots may be interchangeably interpreted. The second case, a case where the data decoding processing capability of the eRedCap UE is considered, a case where the PDSCH bandwidth is larger than a bandwidth for data decoding processing by the eRedCap UE, a case where a processing time of data decoding by the eRedCap UE is longer than a processing time of data decoding by a RedCap UE or a normal UE, a case where the PDSCH bandwidth is equal to a BWP for downlink control channel, and a case of decoding of a first downlink shared channel across a plurality of slots may be interchangeably interpreted.

### (5.1) First Case

A UE may determine reception of repetitions of a PDSCH in a RA procedure or assume repetitions of a PDSCH, based on configuration or indication. The PDSCH may include a RAR or may be at least one of Msg2 and MsgB. The RAR may be at least one of a MAC RAR, a fallback RAR, and a success RAR. The repetitions of a PDSCH may be across a plurality of slots.

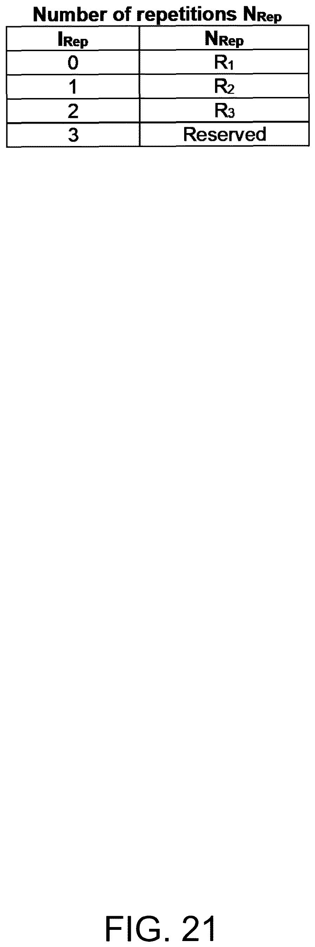

The number of repetitions of a PDSCH may be configured or indicated by a base station. For example, the number of repetitions of a PDSCH may be configured or indicated by using at least one of a cell-specific parameter included in SIB1 (system information) and DCI. For example, a plurality of numbers of repetitions of a PDSCH may be configured by using the cell-specific parameter, and one of the plurality of numbers of repetitions of a PDSCH may be indicated by DCI. The DCI may be a DCI format (for example, DCI format 1_0) with CRC scrambled by any of a RA-RNTI, a MsgB-RNTI, and an SI-RNTI. As shown in FIG. 21, a plurality of values {R1, R2, R3, ...} of the number N_{Rep} of repetitions of a PDSCH corresponding to a plurality of respective values {0, 1, 2, ...} of a field I_{Rep} in DCI may be configured by the cell-specific parameter, and one value of I_{Rep} is indicated by a field in the DCI to determine one value of the number N_{Rep} of repetitions of a PDSCH. Alternatively, a TDRA table including the numbers of repetitions of a PDSCH may be defined or configured, one value in the TDRA table may be indicated by a value set in a field (for example, a PUSCH time resource allocation (assignment) field) in DCI to determine the number of repetitions of a PDSCH.

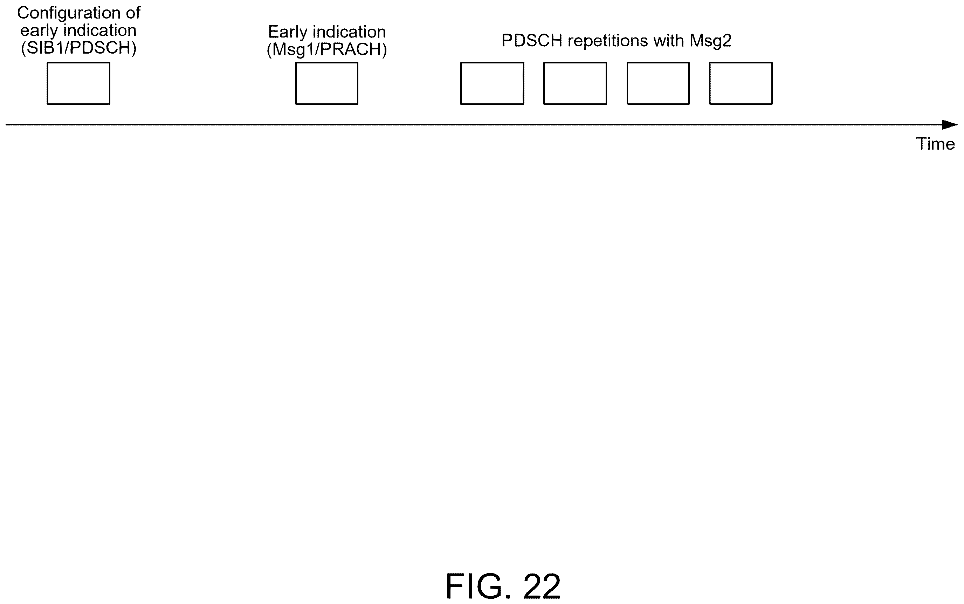

The UE may determine control for the PDSCH, based on at least one of Msg1 based early indication being configured and Msg1 based early indication being performed. As in the example of FIG. 22, the UE may recognize repetitions of a PDSCH, based on at least one of Msg1 based early indication being configured and Msg1 based early indication being performed. For example, whether the size (the number of bits) of a frequency domain resource allocation field in DCI is based on the size of a DL BWP or based on a configured specific frequency band may be determined. The DL BWP may be CORESET #0 or an initial DL BWP. The specific frequency band may have a bandwidth equal to or smaller than 5 MHz. The UE may receive information indicating the specific frequency band. The UE may receive at least one of system information, an RRC message, and DCI including information indicating the specific frequency band. In other words, a base station may transmit at least one of system information, an RRC message, and DCI including information indicating the specific frequency band. The system information may be SIB1. The DCI may be a DCI format (for example, DCI format 1_0) with CRC scrambled by any of a RA-RNTI, a MsgB-RNTI, and an SI-RNTI. The number of repetitions of a PDSCH may be defined in a specification, may be configured by the system information, or may be indicated by the DCI.

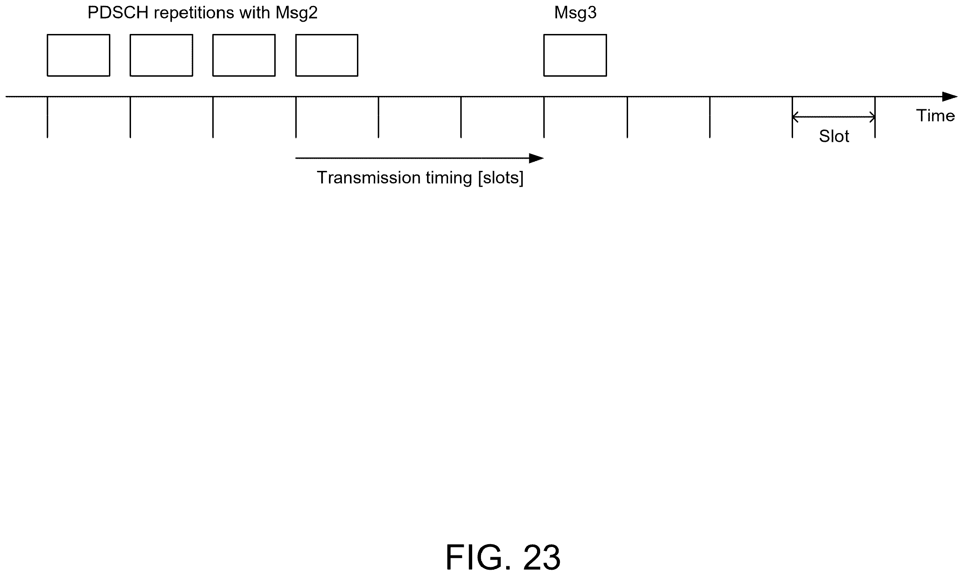

As in the example in FIG. 23, a UE may determine transmission timing of Msg3, based on timing of a specific repetition of a plurality of repetitions of a PDSCH. The specific repetition may be interpreted as a specific PDSCH in the plurality of repetitions of the PDSCH. The plurality of repetitions may be configured by the number of repetitions or indicated by the base station. The specific repetition may be the last repetition of the plurality of repetitions configured or indicated by the number of repetitions or may be a repetition received last by the UE. The timing of the specific repetition may be reference timing for determining transmission timing of Msg3. The timing of the specific repetition may be the end timing of the plurality of repetitions, the end slot of the plurality of repetitions, or the slot of the repetition received last by the UE. The PDSCH with the plurality of repetitions or the specific repetition may be a PDSCH with Msg2 (MAC RAR or fallback RAR). For example, the UE may determine transmission timing of Msg3, based on a slot of the last repetition with a RAR message, a PUSCH time resource allocation (assignment) field in the RAR message, and a TDRA table.

Frequency hopping may be applied to a PUSCH with Msg3. The UE may apply frequency hopping to a PUSCH with Msg3 in the determined transmission timing. For example, the base station may transmit at least one of system information, an RRC message, and DCI including information indicating whether or not to apply frequency hopping (enabling or disabling of frequency hopping) to a PUSCH with Msg3. The UE may determine whether or not to apply frequency hopping to a PUSCH with Msg3, based on the information indicating whether or not to apply frequency hopping included in at least one of the system information, the RRC message, and the DCI. The base station may transmit at least one of system information, an RRC message, and DCI including information indicating the specific frequency band to which frequency hopping is applied. The UE may determine the information indicating the specific frequency band to which frequency hopping is applied, based on the information indicating the specific frequency band included in at least one of the system information, the RRC message, and the DCI. The specific frequency band may have a bandwidth equal to or smaller than 5 MHz. The system information may be SIB1. The DCI may be a DCI format (for example, DCI format 1_0) with CRC scrambled by any of a RA-RNTI, a MsgB-RNTI, and an SI-RNTI.

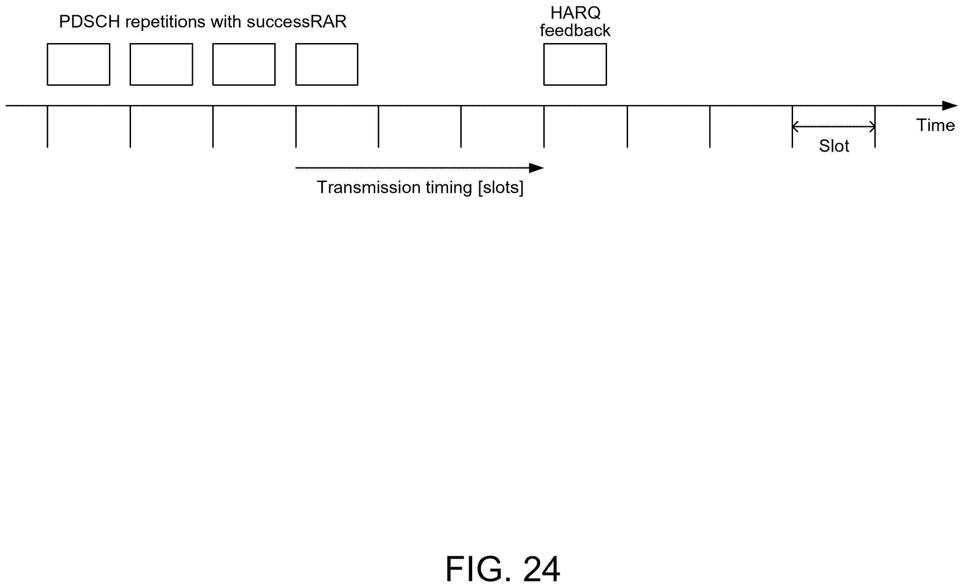

As shown in the example in FIG. 24, the UE may determine, based on the slot of the last repetition of a PDSCH with a success RAR message (MsgB), transmission timing of a PUCCH with HARQ feedback for the PDSCH. For example, the UE may determine, based on the slot of the last repetition of the PDSCH with a success RAR message and an HARQ feedback transmission timing indicator in the success RAR message, transmission timing of a PUCCH with HARQ feedback for the PDSCH. Candidates for the value (the number of slots) of the HARQ feedback transmission timing indicator may include candidates corresponding to a value k defined in a specification or the like in advance. An offset for the value (the number of slots) of the HARQ feedback transmission timing indicator may be configured. The offset may be an eRedCap-specific parameter. For example, the base station may transmit at least one of system information, an RRC message, and DCI including information indicating the offset. The UE may determine a value of the offset, based on the information indicating the offset included in at least one of the system information, the RRC message, and the DCI. The system information may be SIB1. The DCI may be a DCI format (for example, DCI format 1_0) with CRC scrambled by any of a RA-RNTI, a MsgB-RNTI, and an SI-RNTI.

According to this operation of the first case, even in a case with repetitions of a downlink shared channel, an eRedCap UE can appropriately transmit an uplink channel corresponding to the downlink shared channel.

### (5.2) Second Case

The UE may transmit capability information related to downlink processing (for example, data decoding processing capability) supported by the UE. For example, the capability information may be a downlink information amount that can be processed per slot or may be a DL-SCH or PDSCH data amount that can be processed per slot. The capability information may be a time for processing one downlink transport block, DL-SCH, or PDSCH. The data decoding processing of a PDSCH may be across a plurality of slots. The processing capability indicated by the capability information may indicate a buffering capability for processing. The buffering capability for processing may be lower than a buffering capability for reception.

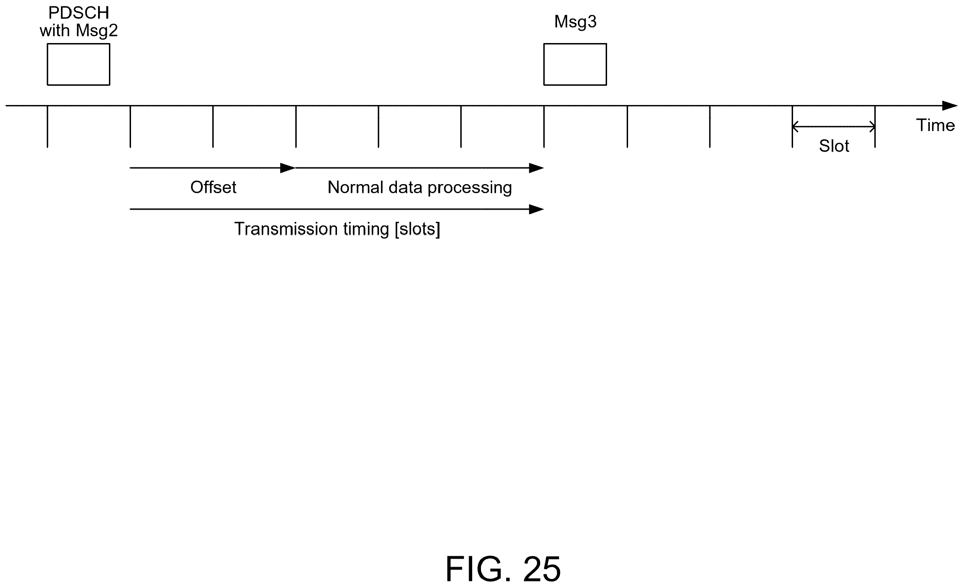

The UE may determine transmission timing of Msg3, based on reception timing of a PDSCH and a parameter for determining transmission timing of Msg3. A PDSCH may be a PDSCH with a MAC RAR or a PDSCH with a fallback RAR. The parameter for determination of transmission timing of Msg3 may be defined in a specification or the like in advance, or configured or indicated by the base station. For example, the base station may transmit at least one of system information, an RRC message, and DCI including the parameter for determining transmission timing of Msg3. The UE may receive the parameter for determination of transmission timing of Msg3 included in at least one of the RRC message and the DCI. The system information may be SIB1. The DCI may be a DCI format (for example, DCI format 1_0) with CRC scrambled by any of a RA-RNTI, a MsgB-RNTI, and an SI-RNTI. The parameter may be an eRedCap-specific parameter or may be a parameter corresponding to the capability information. For example, the parameter may be defined in a TDRA table for Msg3 (for example, a Msg3 PUSCH). For example, as shown in the example in FIG. 25, the parameter may be an offset for a time resource defined in a TDRA table for a PUSCH. The time resource may be a time resource for a normal UE or a RedCap UE. The offset may be an offset related to a time for processing a PDSCH, may be an offset corresponding to capability information related to the time for processing a PDSCH, or may be the number of slots.

As described above, frequency hopping may be applied to a PUSCH with Msg3. The UE may apply frequency hopping to a PUSCH with Msg3 in the determined transmission timing. The UE may receive information indicating the specific frequency band to which frequency hopping is applied. The specific frequency band may have a bandwidth equal to or smaller than 5 MHz. The UE may receive at least one of system information, an RRC message, and DCI including information indicating the specific frequency band. The system information may be SIB1. The DCI may be a DCI format (for example, DCI format 1_0) with CRC scrambled by any of a RA-RNTI, a MsgB-RNTI, and an SI-RNTI.

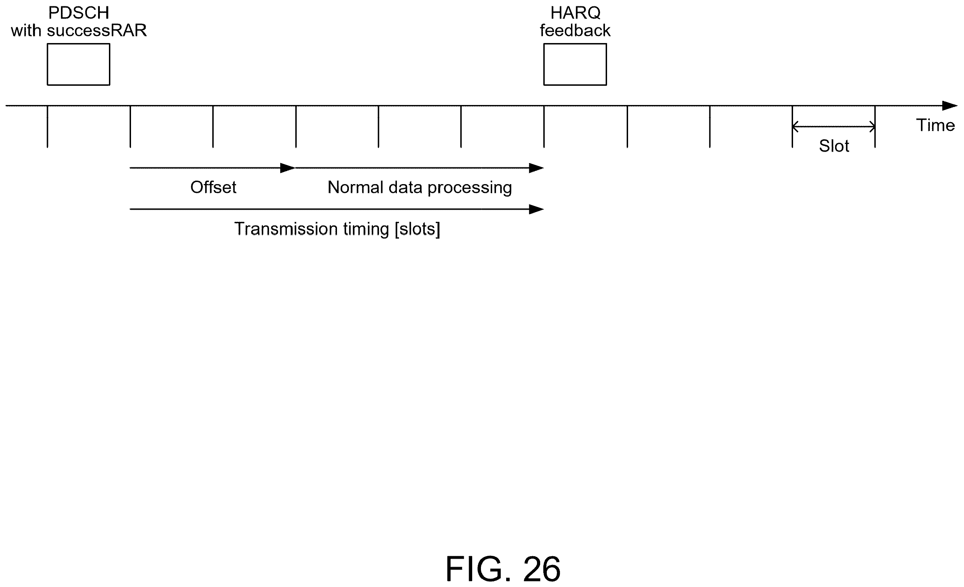

The UE may determine transmission timing of HARQ feedback, based on reception timing of a PDSCH and a parameter for determining transmission timing of HARQ feedback. The PDSCH may be a PDSCH with a success RAR. The parameter for determination of transmission timing of HARQ feedback may be defined in a specification or the like in advance, or configured or indicated by the base station. For example, the base station may transmit at least one of system information, an RRC message, and DCI including the parameter for determining transmission timing of HARQ feedback. The UE may receive the parameter for determination of transmission timing of HARQ feedback included in at least one of the RRC message and the DCI. The system information may be SIB1. The DCI may be a DCI format (for example, DCI format 1_0) with CRC scrambled by any of a RA-RNTI, a MsgB-RNTI, and an SI-RNTI. The parameter may be an eRedCap-specific parameter. For example, as shown in the example in FIG. 26, the parameter may be an offset for a time resource indicated for HARQ feedback. The time resource may be a time resource for a normal UE or a RedCap UE. The offset may be an offset related to a time for processing a PDSCH, may be an offset corresponding to capability information related to the time for processing a PDSCH, or may be the number of slots.

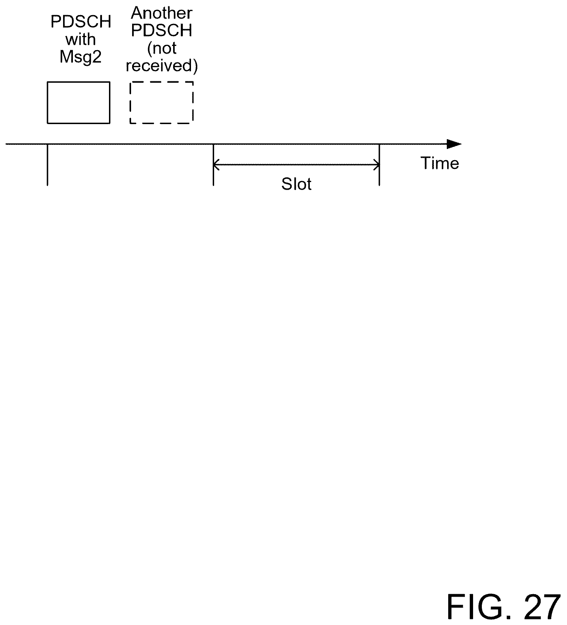

The UE need not decode another PDSCH at timing of a specific downlink message. The specific downlink message may be a PDSCH with a RAR message, may be SIB1, or may be paging. For example, the UE need not be requested to simultaneously receive two or more PDSCHs including a PDSCH with a RAR message. As shown in FIG. 27, the UE need not decode another PDSCH in a slot of receiving a PDSCH with a RAR message. The PDSCH with a RAR message may be scheduled by using a DCI format (for example, DCI format 1_0) with CRC scrambled by a RA-RNTI or a MsgB-RNTI. The other PDSCH may be a DCI format (for example, DCI format 1_0 and/or DCI format 1_1 and/or DCI format 1_2) with CRC scrambled by a C-RNTI or a CS-RNTI. The UE need not decode another PDSCH in the same frequency band as the frequency band of the PDSCH with a RAR message. In other words, when another PDSCH is scheduled in the same frequency band as the frequency band in which the PDSCH with a RAR message is scheduled, the UE need not decode the other PDSCH. The UE need not decode another PDSCH in the slot and the frequency band of the PDSCH with a RAR message. In other words, when another PDSCH is scheduled in the same slot and frequency band as the slot and frequency band (i.e., the time-domain resource and the time-domain resource) in which the PDSCH with a RAR message is scheduled, the UE need not decode the other PDSCH. In the slot and frequency band or receiving the PDSCH with a RAR message, the UE may drop the other PDSCH, regard no transmission of the other PDSCH, or assume no transmission of the other PDSCH.

According to this operation of the second case, even in a case with repetitions of a downlink shared channel, an eRedCap UE can appropriately transmit an uplink channel corresponding to the downlink shared channel.

According to the embodiment above, even in a case of repetitions or decoding of the first downlink shared channel for a RA procedure across a plurality of slots, an eRedCap UE can appropriately process transmission of an uplink channel in response to the first downlink shared channel or reception of a second downlink shared channel.

### <Supplements>

A frequency range in which an eRedCap UE in the present disclosure operates is not limited to FR1. For example, the above-described method in the present disclosure may be applied to control related to a BWP in FR2 (FR2-1, 2-2), FR3, FR4, or the like.

In the present disclosure, instead of a parameter locationAndBandwidth, a parameter indicating the location of a BWP and/or a parameter indicating the bandwidth of a BWP may be used.

In the present disclosure, a ServingCellConfigCommonSIB information element in SIB1 and a ServingCellConfigCommon information element included in another RRC message (for example, information for reconfiguration with synchronization in a CellGroupConfig information element indicating a configuration of a cell group (ReconfigurationWithSync field) or information for a secondary cell (SCellConfig field)) may be interchangeably interpreted.

A BWP in the present disclosure and at least one of a subcarrier, a resource element, a subband, a resource block (RB), a physical RB (PRB), a common RB (CRB), a virtual RB (VRB), a resource block set, a frequency band, a bandwidth, a frequency bandwidth, a frequency resource, a frequency-domain resource, a partial band, and the like may be interchangeably interpreted.

In the present disclosure, one or a plurality of search spaces may be referred to as a search space set. In the present disclosure, a "search space," a "search space set," a "search space configuration," a "search space set configuration," a "CORESET," a "CORESET configuration," and the like of the present disclosure may be interchangeably interpreted.

In the present disclosure, a channel and a signal may be interchangeably interpreted.

In the present disclosure, radio resource control (RRC), an RRC parameter, an RRC message, a higher layer parameter, a field, an information element (IE), a configuration, and the like may be interchangeably interpreted.

"-rXX" in the present disclosure indicates a parameter defined or to be defined in 3GPP Rel. XX. The name of a parameter is not limited to the name given as an example (for example, "-rXX" may be omitted, "-rXX" may be added, or a different number or character may be used in XX). The 3GPP release to which the present disclosure is applied is not limited to Rel. 18.

In the present disclosure, a RedCap-specific BWP (including a RedCap-specific initial BWP) may correspond to a BWP having a bandwidth up to the maximum bandwidth (for example, 20 MHz) that can be used by a RedCap UE. In the present disclosure, an eRedCap-specific (initial) BWP for control channel may correspond to a BWP having a bandwidth up to the maximum bandwidth (for example, 20 MHz) that can be used by an eRedCap UE. In the present disclosure, an eRedCap-specific BWP (including an eRedCap-specific initial BWP, an eRedCap-specific (initial) BWP for data channel) may each correspond to a BWP having a bandwidth up to a reduced bandwidth (for example, 5 MHz).

A UE may perform the operation of any of the above operation examples, based on at least one of the UE being an eRedCap UE and the UE having reported capability information related to an eRedCap UE or a data decoding processing capability.

The UE perform the operation of any of the above operation examples, based on at least one of Msg1 based early indication being configured and Msg1 based early indication being performed.

### <Variations>

The terminology described in the present disclosure and the terminology that is needed to understand the present disclosure may be replaced by other terms that convey the same or similar meanings.

In the present disclosure, the words such as an apparatus, circuitry, a device, a section, a unit, and the like can be interchangeably interpreted.

The information, parameters, and the like described in the present disclosure may be represented in absolute values or in relative values with respect to certain values, or may be represented in another corresponding information. For example, radio resources may be specified by certain indices.

The names used for parameters and the like in the present disclosure are in no respect limiting. Furthermore, mathematical expressions that use these parameters and the like may be different from those expressly disclosed in the present disclosure.

The information, signals, and the like described in the present disclosure may be represented by using any of a variety of different technologies. For example, data, instructions, commands, information, signals, bits, symbols, chips, and the like, all of which may be referenced throughout the herein-contained description, may be represented by voltages, currents, electromagnetic waves, magnetic fields or particles, optical fields or photons, or any combination of these.

The information, signals, and the like that are input and/or output may be stored in a specific location (for example, a memory) or may be managed by using a management table. The information, signals, and the like to be input and/or output can be overwritten, updated, or appended. The information, signals, and the like that are output may be deleted. The information, signals, and the like that are input may be transmitted to another apparatus.

Notification of information is by no means limited to the aspects/embodiments described in the present disclosure, and other methods may be used instead. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and the like), Medium Access Control (MAC) signaling, and the like), and other signals or combinations of these.

Physical layer signaling may be referred to as Layer 1/Layer 2 (L1/L2) control information (L1/L2 control signals), L1 control information (L1 control signal), and the like. RRC signaling may be referred to as an RRC message, and can be, for example, an RRC connection setup message, an RRC connection reconfiguration message, and the like. Notification of MAC signaling may be made by using, for example, a MAC control element (MAC CE).

Notification of certain information (for example, notification of "X holds") does not necessarily have to be made by explicit notification, and may be made by implicit notification (by, for example, not making notification of this certain information or making notification of another piece of information).

Software, whether referred to as software, firmware, middleware, microcode, or hardware description language, or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and the like.

Software, commands, information, and the like may be transmitted and received via communication media. For example, when software is transmitted from a website, a server, or other remote sources by using at least one of wired technologies (coaxial cables, optical fiber cables, twisted-pair cables, digital subscriber lines (DSL), and the like) and wireless technologies (infrared radiation, microwaves, and the like), at least one of these wired technologies and wireless technologies are also included in the definition of communication media.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and the like can be used interchangeably.

In the present disclosure, the terms such as a "mobile station (MS)," a "user terminal," a "user equipment (UE)," and a "terminal" may be used interchangeably.

At least one of a base station and a mobile station may be referred to as a transmitting apparatus, a receiving apparatus, a radio communication apparatus, and the like. At least one of a base station and a mobile station may be a device mounted on a moving object or a moving object itself, or the like.

The moving object may be a vehicle (for example, a car, an airplane, or the like), may be a moving object which moves unmanned (for example, a drone, an automatic operation car, or the like), or may be a robot (a manned type or unmanned type). At least one of a base station and a mobile station also includes an apparatus which does not necessarily move during communication operation.

The aspects/embodiments illustrated in the present disclosure may be used individually or in combinations, which may be switched depending on the mode of implementation. The order of processes, sequences, flowcharts, and the like in the aspects/embodiments described in the present disclosure may be re-ordered as long as inconsistencies do not arise. For example, although various methods have been illustrated in the present disclosure with various components of steps in exemplary orders, the specific orders that are illustrated herein are by no means limiting.

The phrase "based on" used in the present disclosure does not mean "based only on," unless otherwise specified. In other words, the phrase "based on" means both "based only on" and "based at least on."

Reference to elements with designations such as "first," "second," and the like used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the present disclosure, "A/B" and "at least one of A and B" may be interchangeably interpreted. In the present disclosure, "A/B/C" may mean "at least one of A, B, and C."

In the present disclosure, the phrase "A and B are different" may mean that "A and B are different from each other." The phrase may mean that "A and B are each different from C." The terms such as "separate" and "be coupled" may be interpreted similarly to "different."

When terms such as "include," "including," and variations of these are used in the present disclosure, these terms are intended to be inclusive, in a manner similar to the way the term "comprising" is used. Furthermore, the term "or" used in the present disclosure is intended to be not an exclusive disjunction.

For example, in the present disclosure, when an article such as "a," "an," or "the" in the English language is added by translation, the present disclosure may include that a noun after any of these articles is in a plural form.

In the present disclosure, "equal to or smaller than," "smaller than," "equal to or larger than," "larger than," "equal to," and the like may be interchangeably interpreted. In the present disclosure, words such as "good," "poor," "large," "small," "high," "low," "early," "late," "wide," and "narrow" may be interchangeably interpreted irrespective of positive degree, comparative degree, and superlative degree. In the present disclosure, expressions obtained by adding "i-th" (i is any integer) to words such as "good," "poor," "large," "small," "high," "low," "early," "late," "wide," and "narrow" may be interchangeably interpreted irrespective of positive degree, comparative degree, and superlative degree (for example, "highest" and as "i-th highest" may be interchangeably interpreted).

In the present disclosure, "of," "for," "regarding," "related to," "associated with," and the like may be interchangeably interpreted.

Although the invention according to the present disclosure has been described in detail above, it should be obvious to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

### <Supplementary Notes>

Regarding one embodiment of the present disclosure, the following supplementary notes of the invention will be given.

### {Supplementary Note 1}

A terminal including:
a communication section that receives a first downlink shared channel for a random access procedure, in a second band narrower than a first band for a specific terminal; and
a processing section that processes, in a case of repetitions or decoding of the first downlink shared channel across a plurality of slots, transmission of an uplink channel in response to the first downlink shared channel or reception of a second downlink shared channel.

### {Supplementary Note 2}

The terminal according to supplementary note 1, wherein the communication section receives system information or downlink control information related to the number of the repetitions.

### {Supplementary Note 3}

The terminal according to supplementary note 1 or 2, wherein the processing section recognizes the repetitions, based on configuration or execution of an early indication.

### {Supplementary Note 4}

The terminal according to any one of supplementary notes 1 to 3, wherein the processing section determines timing of the transmission, from end timing of the repetitions.

### {Supplementary Note 5}

The terminal according to any one of supplementary notes 1 to 4, wherein the processing section determines timing of the transmission, from timing of the reception of the first downlink shared channel, based on at least one of capability information related to processing of the first downlink shared channel and an offset related to a time for processing of the first downlink shared channel.

### {Supplementary Note 6}

The terminal according to any one of supplementary notes 1 to 5, wherein no reception of the second downlink shared channel is assumed in a band or a slot of the first downlink shared channel.

### {Supplementary Note 7}

The terminal according to any one of supplementary notes 1 to 6, wherein the first downlink shared channel involves a random access response.

### {Supplementary Note 8}

The terminal according to any one of supplementary notes 1 to 7, wherein the uplink channel involves message 3 or hybrid automatic request (HARQ) feedback.

### {Supplementary Note 9}

A base station including:
a transmitting section that transmits a first downlink shared channel for a random access procedure, in a second band narrower than a first band for a specific terminal; and
a processing section that processes, in a case of repetitions or decoding of the first downlink shared channel across a plurality of slots, reception of an uplink channel in response to the first downlink shared channel or transmission of a second downlink shared channel.

### {Supplementary Note 10}

A communication method performed in a terminal, the communication method including:
receiving a first downlink shared channel for a random access procedure, in a second band narrower than a first band for a specific terminal; and
processing, in a case of repetitions or decoding of the first downlink shared channel across a plurality of slots, transmission of an uplink channel in response to the first downlink shared channel or reception of a second downlink shared channel.

## Claims

1. A terminal comprising:
a communication section that receives a first downlink shared channel for a random access procedure, in a second band narrower than a first band for a specific terminal; and
a processing section that processes, in a case of repetitions or decoding of the first downlink shared channel across a plurality of slots, transmission of an uplink channel in response to the first downlink shared channel or reception of a second downlink shared channel.

2. The terminal according to claim 1, wherein the communication section receives system information or downlink control information related to the number of the repetitions.

3. The terminal according to claim 1, wherein the processing section recognizes the repetitions, based on configuration or execution of an early indication.

4. The terminal according to claim 1, wherein the processing section determines timing of the transmission, from end timing of the repetitions.

5. The terminal according to claim 1, wherein the processing section determines timing of the transmission, from timing of the reception of the first downlink shared channel, based on at least one of capability information related to processing of the first downlink shared channel and an offset related to a time for processing of the first downlink shared channel.

6. The terminal according to claim 1, wherein no reception of the second downlink shared channel is assumed in a band or a slot of the first downlink shared channel.

7. The terminal according to claim 1, wherein the first downlink shared channel involves a random access response.

8. The terminal according to claim 1, wherein the uplink channel involves message 3 or hybrid automatic request (HARQ) feedback.

9. A base station comprising:
a transmitting section that transmits a first downlink shared channel for a random access procedure, in a second band narrower than a first band for a specific terminal; and
a processing section that processes, in a case of repetitions or decoding of the first downlink shared channel across a plurality of slots, reception of an uplink channel in response to the first downlink shared channel or transmission of a second downlink shared channel.

10. A communication method performed in a terminal, the communication method comprising:
receiving a first downlink shared channel for a random access procedure, in a second band narrower than a first band for a specific terminal; and
processing, in a case of repetitions or decoding of the first downlink shared channel across a plurality of slots, transmission of an uplink channel in response to the first downlink shared channel or reception of a second downlink shared channel.
